# EUROPÄISCHE PATENTSCHRIFT

(11) **EP 3 924 227 B1**
(45) Veröffentlichungstag und Bekanntmachung des Hinweises auf die Patenterteilung: **25.06.2025**
(21) Anmeldenummer: 19742146.4
(22) Anmeldetag: 10.07.2019
(51) Int. Cl.: B60T 8/32, B60T 8/40

(54) **HYDRAULIKSYSTEM MIT MINDESTENS ZWEI HYDRAULISCHEN KREISEN UND ZWEI DRUCKVERSORGUNGSEINRICHTUNGEN**
HYDRAULIC SYSTEM HAVING AT LEAST TWO HYDRAULIC CIRCUITS AND TWO PRESSURE SUPPLY DEVICES
SYSTÈME HYDRAULIQUE MUNI D'AU MOINS DEUX CIRCUITS HYDRAULIQUES ET D'AU MOINS DEUX DISPOSITIFS D'ALIMENTATION EN PRESSION

(30) Priorität: 12.02.2019 DE 202019101596 U
(43) Veröffentlichungstag der Anmeldung: 22.12.2021
(60) Teilanmeldung: 25177766.0
(73) Patentinhaber: IPGATE AG, 8808 Pfäffikon SZ (CH)
(72) Erfinder: LEIBER, Thomas, 22203 Rogoznica (HR); LEIBER, Heinz, 71739 Oberriexingen (DE); VAN ZANTEN, Anton, 71254 Ditzingen (DE)
(74) Vertreter: Felber, Josef
(86) Internationale Anmeldenummer: PCT/EP2019/068596
(87) Internationale Veröffentlichungsnummer: WO 2020/164755

(56) Entgegenhaltungen:
- WO-A1-2012/146461
- WO-A1-2015/032637
- WO-A1-2017/148968
- DE-A1- 10 319 338
- DE-A1- 102008 015 241

## Beschreibung

Die vorliegende Erfindung betrifft ein Hydrauliksystem und deren Regelverfahren mit mindestens zwei Druckversorgungen für redundante Funktionen.

### Stand der Technik

Die Automobilindustrie befindet sich in einem disruptiven Veränderungsprozess. Neben der zunehmenden Marktdurchdringung von Elektrofahrzeugen werden verschiedene Stufen des automatisierten Fahrens (AD= Automated Drive) durchlaufen, dies sind zunächst: Stufe 3 - Hoch Automatisiertes Fahren - HAD, Stufe 4 - Voll Automatisiertes Fahren - FAD und Stufe 5 - Autonomes Fahren - AD, wobei bei jeder Stufe die Anforderungen an die verwendeten Bremssysteme steigen.

Hierdurch wurde die Entwicklung von neuen Bremssystemen vorangetrieben. Die Ablösung von Vakuumbremskraftverstärkern durch elektrische Bremskraftverstärker (e-BKV) begann 2005 mit dem integrierten Bremssystems IBS1 [ATZ Ausgabe 6/11, DE 11 2009 005 541 B3] mit der Markteinführung von sog. 2-Box-Lösungen mit elektrischen Folgebremskraftverstärkern und zusätzlicher ESP-Einheit im Jahr 2013 [ATZ-Ausgabe 4/18], zeitnah gefolgt durch erste integrierte 1-Box Systeme mit Pedalsimulator im Jahr 2017 [Bremsenhandbuch - Kapitel 20]. Aktuell werden Lösungen für die Stufe 3 (HAD) entwickelt. Zukünftige Veränderungen werden durch in dem ATZ Artikel 3/19 "Bremskraftverstärker für das automatisierte Fahren" beschrieben.

Ab Stufe 3 (HAD) ist eine redundante Druckversorgung erstmalig zwingend erforderlich. Zudem ist eine Verbindung der Bremskreise mit den Vorratsbehälter bei offenen Bremssystemen weitestgehend zu vermeiden und Pedalgefühlsimulatoren mit konstanter Pedalcharakteristik setzen sich als Standard durch. Weiter muss auch eine Redundanz der ABS-Funktion bereitgestellt werden. Dies wird bei sog. 2-Box-Systemen mit elektrischem Bremskraftverstärker und ESP/ABS-Aggregat gemäß Stand der Technik derart realisiert, dass der elektrische Bremskraftverstärker (e-BKV) eine Druckmodulations-Funktion bei Ausfall des ESP-Aggregates übernimmt, um stets eine hohe Fahrzeugverzögerung zu gewährleisten. Hier wird im ersten Schritt eine sog. "ABS selectlow bzw. achsindividuelle Druckregelung für die elektronische Bremskraftverteilung (EBV)" eingeführt. Die wird bespielweise wie in DE 11 2009 005 541 B3 dargestellt durch Vor- und Rückbewegung des Kolbens einer Kolben-Zylinder-Einheit realisiert

Ab Stufe 4 (FAD) werden für ausreichende Systemverfügbarkeit 3-fach Redundanzen erwartet, z.B. bei den Pedalsensoren mit der Regel "2 aus 3". Zudem ist ein Pedalsimulator wegen zunehmender Rekuperationsleistung von Elektrofahrzeugen und fehlender Akzeptanz der Veränderung der Pedalcharakteristik zwingend, weil vollautomatisches Fahren (FAD) über eine längere Zeitdauer betrieben werden kann und der Fahrer bei Übergang auf pilotiertes Fahren nicht auf eine Veränderung der Pedalcharakteristik vorbereitet ist. Zur Überwachung der Druckversorgung ist ein redundanter Druckgeber vorzusehen bzw. eine alternative Diagnosemöglichkeit vorzusehen. Weiter wird eine redundante ABS-Funktion mit zumindest achsindividueller, insbesondere radindividueller Radregelung gefordert und es werden Teilredundanzen eingeführt. Bremssysteme mit geschlossenen Bremskreisen im ABS-Betrieb haben Sicherheitsvorteile gegenüber Hydrauliksystemen, bei welchen im Regelbetrieb Druck über geöffnete Auslassventile in einen Vorratsbehälter abgelassen werden.

Die Anforderungen, insbesondere Sicherheitsanforderungen beim halbautomatisiertem (HAD) und vollautomatisiertem (FAD) Fahren haben wie einleitend ausgeführt großen Einfluss auf die Systemgestaltung. Diese bedingen redundante und teilredundante Systeme, Funktionen und Komponenten.

Im Vordergrund steht hier die redundante Druckversorgung, bei der die Bremskraft oder der Druckaufbau auch ohne Fahrerfuß gewährleistet sein muss. Entsprechend muss auch die elektronische Steuerung für diese Funktion ausgebildet sein. Für AD Level 3, insbesondere AD Level 4, muss ebenfalls die ABS-Funktion auch im Fehlerfalle gewährleistet sein. Redundanz in der ABS-Funktion in je nach AD-Automatisierungsstufe entweder eine "achsindividueller Regelung" oder "radindividueller Regelung".

Bei einer redundanten Druckversorgung kann auch ein Systemkonzept ohne Tandem-HZ, nur mit sog. E-Pedal oder für AD Level 5 nur mit einem Zentralrechner, der ein Sollsignal vorgibt ausgeführt werden. Hierbei sind folgende Patenanmeldungen erwähnenswert: DE 10 2017 222 450 offenbart ein Hydrauliksystem mit nur einem Hauptzylinder, redundanter Druckversorgung, Trennventilen zum Hauptzylinder und einen Wegsimulator. Ein Bypassventil zwischen den beiden Bremskreisen ermöglicht bei Ausfall einer Druckversorgung der zweiten Druckversorgung beide Bremskreise zu versorgen. Regelbetrieb mit stromlos offenen Ventilen ist extrem sicherheitsrelevant, da bei Ausfall des Ventils und z. B. Bremskreisausfall, ein Totalausfall der Bremse die Folge sein kann..

DE 10 2017 222 435 und DE 10 2016 225 537 zeigen ein Konzept mit 2 Druckversorgungen und E-Pedal, redundanter Druckversorgung und Bypassventil. Alle Systeme verwenden für die ABS-Funktion beim Druckabbau ein Auslassventile, über die Druck in den Vorratsbehälter abgelassen wird. Gerät beim Öffnen des Ventils ein Schmutzpartikel in dessen Ventilsitz, so kann dies einen Bremskreisausfall bei der nächsten Bremsung bewirken.

DE 10 2017 207 954 zeigt ein Systemkonzept mit redundanter Druckversorgung und ohne Auslassventile für die ABS-Druckregelung. Hier wird das sogenannte Multiplex-Druckregelverfahren, welches in DE 10 2005 055 751 und DE 10 2009 008 944 eingeführt wurde, eingesetzt, bei dem die Drucksteuerung für ABS von der Druckversorgung durch Volumenmessung und Druckinformation erfolgt. Hierbei werden auch die Schaltventile zur Drucksteuerung verwendet. Ein Sicherheitsrisiko entsteht, wenn die Kolbendichtung oder ein Rückschlagventil zum Vorratsbehälter ausfällt und das Schaltventil durch Schmutzpartikel undicht ist, was ebenso einen Totalausfall der Bremse zur Folge hat.

WO 2019/002475 A1 offenbart eine weitere Variante mit zwei Druckversorgungen, die beide als elektrisch angetriebenen Kolben-Zylindereinheiten ausgeführt sind, sowie einer Betätigungseinhalt mit Pedalgefühlsimulator oder einen Zentral-ECU ohne Betätigungseinheit für AD Level 4 oder AD Level 5. Dabei ist die Betätigungseinheit an der Spitzwand montiert und von der Druckversorgungseinrichtung getrennt. Die Funktionsredundanz im ABS-Betrieb wird dadurch erreicht, dass bei Ausfall einer Druckversorgungseinrichtung die zweite Druckversorgungseinrichtung den ABS-Regelbetrieb an allen Radbremsen über ein Verbindungsmodul übernimmt. Das 2. Modul kann und somit die Funktionsredundanzanforderungen für AD Level 4 und AD Level 5 erfüllen. Für den Regelbetrieb wird bevorzugt ebenfalls das Multiplex-Verfahren nach DE 10 2005 055 751 oder DE 10 2009 008 944 eingesetzt mit der primären Absicht, die Bremskreise nicht oder nur selten zu öffnen und somit die Fehlersicherheit. Im Vergleich zu DE 10 2017 222 435**,** wo der Druckabbau vornehmlich mit Auslassventilen erfolgt, zu erhöhen. In ATZ 3/19 ist ausgeführt, dass der Betrieb im offenen Bremskreis sicherheitskritisch ist. Bei sog. offenen Bremssystemen wird bei ABS-Eingriff durch Öffnen eines Auslassventils der Radkreise mit dem Vorratsbehälter hydraulisch verbunden. Dadurch sind unerkannte Undichtigkeiten bei Ventilen z.B. durch Schmutzpartikel im Ventilsitz und Dichtungen (schlafende Fehler) besonders relevant. Verbindet ein Magnetventil mit schlafendem Fehler beispielsweise die beiden Bremskreise, kann bei Bremskreisausfall die DV und im schlimmsten Fall auch die gesamte Bremse ausfallen.

Aus der WO 2012/146461 A1 ist eine Bremsanlage für Kraftfahrzeuge mit einer "Brake-by-Wire"-Betriebsart und einer Rückfallbetriebsart bekannt.

Oben genannte Beispiele zeigen das Problem der schlafenden Fehler, die bei Doppelfehlern kritisch werden, wenn diese nicht vor dem Bremsmanöver von der Diagnose erfasst werden können.

### Aufgabe der Erfindung

Die Erfindung stellt sich die Aufgabe, ein kompaktes, kostengünstiges und im höchsten Grade fehlersicheres Hydrauliksystem mit mehreren Bremskreisen und zwei kostenoptimierten Druckversorgungen bereitzustellen.

### Lösung der Aufgabe

Diese Aufgabe wird mit einem Bremssystem mit den Merkmalen des Anspruchs 1 erfindungsgemäß gelöst. Weitere vorteilhafte Ausgestaltungen des Hydrauliksystems gemäß Anspruch 1 ergeben sich durch die Merkmale der Unteransprüche.

### Vorteile der Erfindung

Die erfindungsgemäße Lösung beschreibt Systemaufbau und Verfahren für die Druckregelung eines redundanten Hydrauliksystems in vier Ausführungsformen ein Bremssystem. Die Ausführungsformen haben alle zwei Druckversorgungen sowie zwei hydraulische Kreise und unterscheiden sich in der Bauform und der Art der Fahrerwunscherfassung. Die Bauform ist entweder ein integriertes System oder ein aufgelöstes System mit separater Betätigungseinheit für die Fahrerwunscherfassung. Der Fahrerwunsch wird durch eine hydraulische Betätigungseinheit mit Pedalgefühlsimulator oder ein reines E-Pedal ohne Hydraulikflüssigkeit erfasst. In einer Ausführungsform (vgl. DE 10 2017 222 435 A1 sowie DE 10 2017 222 450 A1) wird als erste Druckversorgung (DV1) eine elektrisch angetriebene Kolben-Zylinder-Einheit und als zweite Druckversorgung (DV2) eine kontinuierlich fördernde Rotationspumpe (Kolbenpumpe oder Zahnradpumpe) eingesetzt. In einer alternativen Ausführungsform wird anstatt der Kolben-Zylinder-Einheit eine elektrisch angetriebene Zahnradpumpe als 1. Druckversorgungseinrichtung eingesetzt. Bei den Ausführungsformen (Kolben-Zylinder-Einheit oder Zahnradpumpe) wird Druck über die Zahnradpumpe/Kolben-Zylinder-Einheit aufgebaut und abgebaut.

Über die Druckversorgungen (DV1 und DV2) kann simultan oder teilsimultan Druck aufgebaut werden. Dies kann für Downsizing der Druckversorgung, Erhöhung der Druckaufbaudynamik oder Redundanzen genutzt werden.

Im Gegensatz zum Stand der Technik kommt die erfindungsgemäße Bremsanlage ferner mit wenigen Magnetventilen, Druckgebern und sehr kleinbauenden und kostengünstigen Druckversorgungen aus, zudem werden beide Druckversorgungen in eine kleine Baueinheit integriert. Zugleich werden die hohen Anforderungen von AD Level 3 und 4 an die Ausfallsicherheit und die Redundanz der Funktionen erfüllt. So ist z.B. auch bei Bremskreisausfall eine sehr hohe Verfügbarkeit im verbleibenden Bremskreis und bei Ausfall einer Druckversorgung kann die ABS-Funktionsanforderung mit achsindividueller, bremskreisindividueller Druckregelung bzw. radindividueller Regelung für AD Level 3 bis 4 erfüllt werden.

Zusätzlich ist die Architektur derart konzipiert, dass das Hydrauliksystem alle Fahrzeugklassen (Kleinwagen bis SUV) abdeckt, da das Fördervolumen der 2. Druckversorgung DV2 nicht begrenzt ist. DV1 kann bei höheren Volumenbedarf zudem z.B. durch Rückbewegung des Kolbens nachfördern. Wird DV1 als Zahnradpumpe ausgeführt, kann kontinuierlich Volumen gefördert werden.

Die erfindungsgemäße Lösung ist gegenüber dem Stand der Technik sehr kostengünstig, kompakt und hat gleichzeitig eine sehr hohe Verfügbarkeit bei Ausfall von Komponenten und Leckagen. Dies wird primär gemäß des Hauptanspruches dadurch erreicht, dass die erste und die zweite Druckversorgungseinrichtung (DV1, DV2) in beiden Bremskreise (BK1, BK2) unabhängig voneinander und/oder simultan/teilsimultan Druck aufbauen können. Die führt gleichzeitig zu hoher Verfügbarkeit, da mittels jeder Druckversorgereinrichtungen unabhängig von der Funktionsfähigkeit der anderen Druckversorgereinrichtung ein Regelbetrieb (ABS, ESP) mit mindestens achsindividueller oder bremskreisindividueller Regelung durchgeführt werden kann.

Die sehr kostengünstige und kompakte Bauweise wird dadurch realisiert, in dem die erste Druckversorgung DV1 vorzugsweise auf einen ersten Druck (p1) und begrenztes Volumen im Vorhub ausgelegt ist. Die Druckversorgung DV1 erzeugt Druck bis zum Radblockierdruck, in der Regel 80-120 bar, während die zweite Druckversorgung DV2 bis zum maximalen Druck (p2) im Bremssystem ausgelegt ist, welcher bei Einflussfaktoren wie z.B. Fading durch überhitzte Bremsen bei PKW in der Regel auf 180-200 bar steigen kann. Bei Elektrofahrzeugen kann der Fadingeffekt durch Bremen über Elektromotor reduziert werden, d.h. es ist ein geringer Maximaldruck erforderlich. Dieser Effekt kann jedoch nur dann genutzt werden, wenn das Fahrzeuggewicht nicht steigt durch Batterie des Elektroantriebes. Da die Druckversorgung DV2 kontinuierlich fördert, ist das Volumen der Kolben-Zylindereinheit der DV1 im Sinne der Kosten- und Bauraumoptimierung vorzugsweise begrenzt und deckt nicht oder nur teilweise den Volumenbedarf der Bremsanlage ab, der unter der Wirkung von Einflussfaktoren wie Luftblasen, Schrägverschleiß, Knock-back und Reibwertschwankungen erforderlich ist. Steigt der Volumenbedarf, kann entweder durch die zweite Druckversorgung DV2 das Volumen bereitgestellt werden oder es wird über die DV1 durch Rückbewegung des Kolbens und vorherigem Trennen der Druckversorgung DV1 vom Bremskreis nachgefördert aus dem Vorratsbehälter. Dadurch kann die Kolben-Zylinder-Einheit sehr kurz ausgeführt werden und der Antriebsmotor der Kolben-Zylinder-Einheit kann auf einen geringes Motordrehmoment ausgelegt werden, was zu einer Kosten- und Gewichtsreduzierung der Druckversorgung führt. Zudem wird bei einer Ausführungsform der ersten Kolben-Zylinder-Einheit mit Spindeltrieb die Belastung des Spindeltriebes reduziert, was zu weiteren Kosteneinsparungen in der Druckversorgungseinrichtung und zu weniger Verschleiß in den Dichtungen führt. Im Normalbetrieb, d.h. ohne signifikante Veränderung durch die o.g. Einflussfaktoren wird primär die Druckversorgung DV1 zur Bremskraftverstärkung, Druckregelung im Rekuperationsbetrieb und im Regelbetrieb (ABS, ESC-Funktion) eingesetzt. Die Druckversorgung DV2 wird dahingegen vorzugsweise nur bei Notbremsfunktionen (AEB) zum extrem schnellen Druckaufbau, bei Betrieb bei hohen Drücken und bei Ausfall der ersten Druckversorgung DV1 eingesetzt. Die Präferenz des Einsatzes der DV1 für den Normalbetrieb ist darin begründet, dass der Betrieb geräuschärmer und genauer erfolgt, da eine Pumpe in der Ausführung als Radialkolbenpumpe Prinzip bedingt Druckamplituden aufweist und somit lauter und über Regelventile weniger genau zu regeln ist als eine Kolben-Zylinder-Einheit oder eine Zahnradpumpe. Wird als zweite Druckversorgung eine Zahnradpumpe eingesetzt, besteht die Geräuscheinschränkung nicht.

Der Druckaufbau der DV1 erfolgt durch Vorbewegung des Kolbens der Kolben-Zylinder-Einheit., der Druckabbau über Rückbewegung des Kolbens der DV1 oder über ein oder mehrere Auslassventile. Primär wird der Druckaufbau und Druckabbau bei aktivem System in Normalbetrieb (Bremskraftverstärkung, Rekuperation, Torque Vektoring) über die DV1 ausschließlich durch Vor- und Rückbewegung des Kolbens geregelt, was im Folgenden auch als PPC-Druckregelung genannt und verstanden wird. PPC-Druckregelung kann dabei mit und ohne Druckgebersignal eingesetzt werden. Bei Einsatz eines Druckgebers, wird die Regelung vorzugsweise durch die Sensorsignale des Antriebsmotors der DV1 (Motorstrom, Winkelposition des Motors) und die Druck-Volumen-Kennlinie der Bremskreise in der Präzision gesteigert, insbesondere bei der präzisen Druckverlaufsregelung beim Blending-Betrieb, z.B. bei Rekuperation von Bremsenergie über Elektromotoren an einer oder mehreren Achsen und der sich daraus ergebenden unterschiedlichen Drücken und Druckverläufen an den Achsen des Fahrzeugs. Fällt der Druckgeber aus oder steht in dem Bremskreis zur Regelung nicht verfügbar, kann auch ohne Druckgeber durch den stromproportionalen Zusammenhang zwischen Phasenstrom (Motordrehmoment M_{Motor} = Drehmomentkonstante kt * Phasenstrom i_{Phase} und Motormoment die Kolbenkraft berechnet und somit näherungsweise der Druck geregelt werden. Temperatureinflüsse werden vorzugsweise durch einen Temperatursensor abgebildet, der den Einfluss der Temperatur auf die Drehmomentkonstante kt_{Temp} = kt * (1-f_{Temp} * □K) mit kt_{Temp}: kt bei abweichender Temperatur von Raumtemperatur 20°C, f_{Temp}: Korrekturfaktor Temperatur in %, □K: Temperaturänderung in Kelvin) korrigiert und somit auch bei unterschiedlichen Temperaturen eine sehr genaue Motordrehmomentberechnung zulässt.

Der Druckaufbau der DV2 erfolgt über eine elektrisch angetriebene Kolbenpumpe, bevorzugt über eine langjährig in KFZ-Bremsanlagen erprobte RadialKolbenpumpe oder einer Zahnradpumpe. Zur Druckbegrenzung und Druckabbau ist bei einer Kolbenpumpe ein Magnetventil erforderlich. Im Vergleich zum Stand der Technik (DE 10 2017 222 435 A1) wird in der erfindungsgemäßen Lösung kein separates Ventil an der Pumpe genutzt, sondern es wird ein Auslassventil des Hydrauliksystems zur Druckregelung genutzt. Der Druckabbau eines durch die DV2 aufgebauten Druckes erfolgt über Auslassventil(e) oder über die PPC-Druckregelung der DV1. Ein komfortabler und geräuscharmer Druckabbau über das zentrale Auslassventil ZAV ohne PPC-Druckregelung der DV1 ist möglich, durch PWM-Ansteuerung der Schaltventile SV der Radzylinder und/oder PWM-Ansteuerung der Ventile BP1 und BP2. Als Alternative zur Radial-Kolbenpumpe wird erfindungsgemäß als Pumpe eine Zahnradpumpe eingesetzt. Dies ermöglicht, dass der Druckabbau auch über die Pumpe erfolgen kann. Hierzu ist erforderlich, dass der Antriebsmotor der Pumpe zumindest drehzahlgeregelt betrieben werden kann und die Drehzahlrichtung umkehrbar ist.

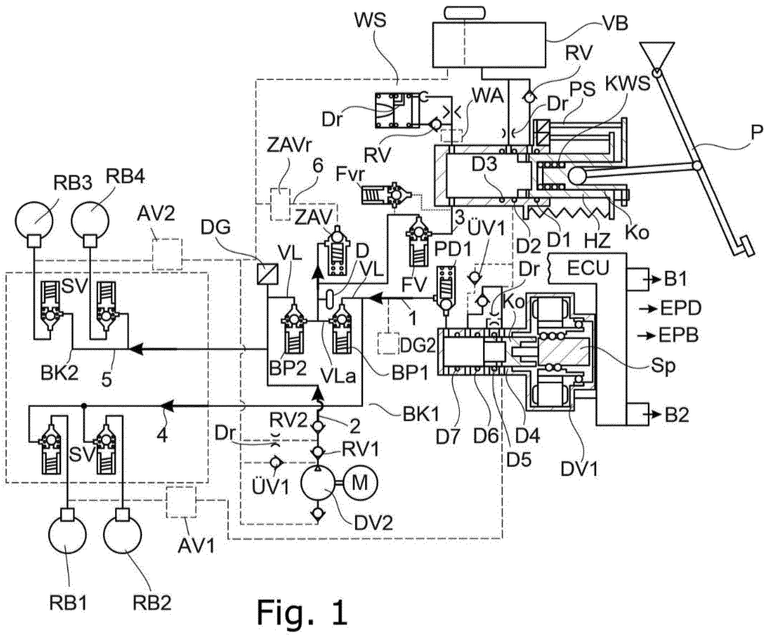

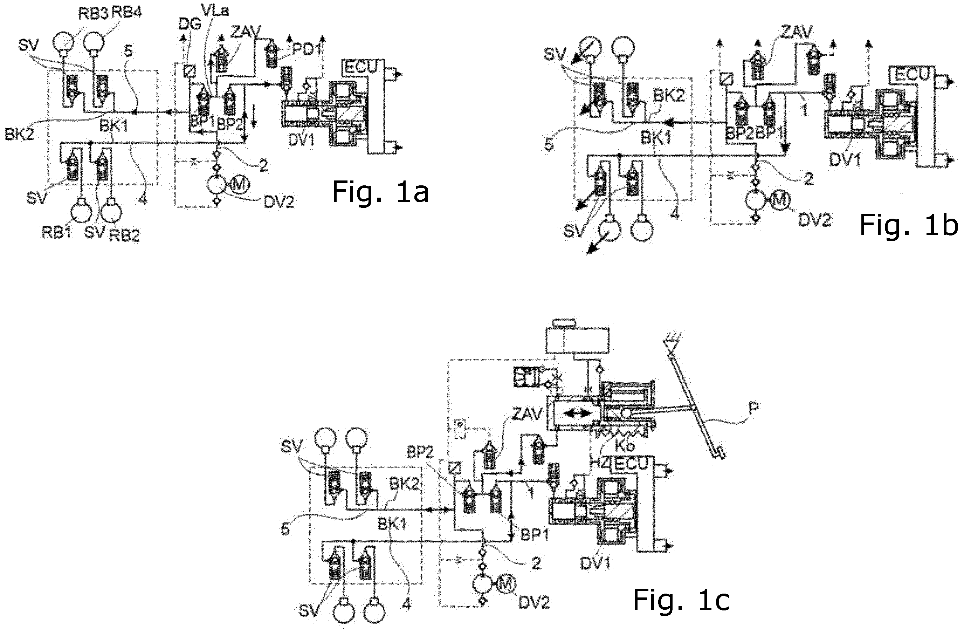

Im Regel- und Rekuperationsbetrieb wird die rad- oder bremskreisindividuelle Multiplexregelung, die sogenannte MUX-Druckregelung, eingesetzt, wobei das Multiplexverfahren nur mit Schaltventilen oder alternativ ergänzend mit mindestens einem Auslassventil (an Radbremse, Zentralventil zwischen Bremskreisen) durchgeführt wird. Dies ermöglicht den gleichzeitigen Druckabbau in mehreren Radbremsen bzw. einem Bremskreis, während in den anderen Radbremsen/2. Bremskreis Druck aufgebaut wird. Durch die Kombination der MUX-Regelung der Regelung des Druckabbaus über Auslassventile und MUX-Regelung können Magnetventile eingespart werden, was zu einer weiteren Kostenreduzierung in der erfindungsgemäßen Vorrichtung führt. So ist bei kostenoptimaler Ausgestaltung nur ein zentrales Auslassventil ZAV erforderlich. Zur weiteren Erhöhung der Sicherheit kann ein in Reihe geschaltetes zweites Auslassventil ZAVr (der Figur 1) eingesetzt werden. Das ZAV-Ventil verbindet die Radbremsen mit dem Vorratsbehälter. Dies Verbindung ist wie eingangs ausgeführt, sicherheitskritisch in Hinblick auf schlafende Fehler. Alternativ oder ergänzend können Auslassventile (AV1, AV2) an der Radbremse zum Druckabbau in den Vorratsbehälter eingesetzt werden. Diese Auslassventile sind vorzugsweise in jedem Bremskreis oder an den Radbremsen der Vorderachse vorgesehen. Bei Schwarz-Weiss-Bremskreis-Verteilung sind die Auslassventile AV1, AV2 an den Vorderradbremszylindern eines Bremskreises, bei diagonalen Bremskreisen an den Vorderradbremszylindern in zwei Bremskreisen, wobei die Auslassventile mit dem Vorratsbehälter verbunden sind und über Schaltventile vom Bremskreis trennbar sind. Die Positionierung der Auslassventile an der Vorderachse ist darin begründet, dass das Volumen der Vorderradbremsen höher ist und somit Auslassventile vorteilhaft zur Entlastung der Druckabbaudynamik dort am sinnvollsten eingesetzt werden können.

Des weiteren kann der Druckaufbau und Druckabbau im PPC oder MUX-Betrieb durch PWM-Steuerung der Magnetventile zwischen Radbremse und Druckversorgung weiter in der Regelung verfeinert werden (PPC+PWM, MUX+PWM), so daß bei PPC-Druckregelung simultan bei unterschiedlichen Radbremsen unterschiedliche Druckverläufe realisiert werden können

Neben der Möglichkeit, den Druck über Auslassventile abzubauen, kann auch im simultanen Druckabbauverfahren durch Rückbewegung des Kolbens der DV1 der Druck von zwei Radbremsen gleichzeitig abgebaut werden, wobei ein Schaltventil komplett geöffnet ist und das zweite Schaltventil PWM getaktet bzw. über ein stromgeregelten Betrieb ein Ventilöffnungsquerschnitt einstellbar ist. Damit ist auch bei unterschiedlichen Druckniveaus in den Radbremsen ein simultaner oder teilsimultaner Druckabbau durch Kolbensteuerung der Druckversorgung und/oder Multiplexbetrieb möglich und es können unterschiedliche Druckgradienten gleichzeitig geregelt werden. PWM-Verfahren kann ebenfalls beim Druckaufbau im PPC oder MUX-Verfahren eingesetzt werden. Damit kann der Bremskreis ganz oder weitestgehend geschlossen betrieben werden, was wie im ATZ 3/19-Artikel ausgeführt, die Fehlersicherheit signifikant erhöht.

Durch die Kombination der verschiedenen Druckregelverfahren im erfindungsgemäßen Hydrauliksystem kann der Druckregelzyklus von 4 Radbremsen im Vergleich zum reinen MUX-Verfahren signifikant verkürzt werden, was sich sehr vorteilhaft auf die Dynamik der Raddruckregelung auswirkt und keinen speziellen Elektromotor mit geringer Trägheitsmasse für die Druckversorgung DV1für den MUX-Betrieb erfordert und nicht Schaltventile zu den Radbremsen mit sehr geringen Strömungswiderstand erfordert, gleichzeitig kann im Hydrauliksystem die Anzahl an Magnetventilen signifikant reduziert werden. Während in der DE 10 2017 222 450 zwei Druckgeber und 16 Magnetventile benötigt werden, kann das erfindungsgemäße System mit vergleichbarer oder sogar höherer Verfügbarkeit und Fehlersicherheit in einer einfachsten Ausführungsform nur 8-9 Magnetventile und 1 Druckgeber betrieben werden.

In der einfachsten Ausführungsform weist das Bremssystem zwei Druckversorgungen und nur 8 Magnetventile (E-Pedal) bzw. 9 Magnetventile (Hydraulischer Simulator) auf, die auf bis zu 12 Magnetventile erweitert werden können, wenn nicht alle Freiheitsgrade in der Druckregelung genutzt werden. Zusätzlich wird vorzugsweise nur ein Druckgeber eingesetzt, der in einem Bremskreis BK2 positioniert, welcher für den Druckaufbau durch die Pumpe genutzt wird. Alternativ ist ein weiterer Druckgeber im Bremskreis BK1 vorgesehen. Magnetventile an den Radbremsen sind vorzugsweise als stromlosoffene Schaltventile SV ausgeführt mit geringen Strömungswiderständen, die vorzugsweise zusätzlich im PWM-Betrieb betrieben werden können. Stromlosoffene Magnetventile (BP1, BP2, Schaltventile an Radbremen) werden vorzugsweise PWM gesteuert, zudem weisen die Ventil unterschiedliche Strömungswiderstände auf (ZAV, ZAVᵣ SV, BP1 mit großen Öffnungsquerschnitt, Auslassventile AV1, AV2 an Radbremsen mit geringem Öffnungsquerschnitt.

Schaltventile sind über den Ventilsitz in hydraulischer Verbindung mit der Radbremse und werden über den Druck in der Radbremse automatisch geöffnet. Die selbstständige Öffnung ist ein wichtiges Sicherheitsfeature insbesondere bei der Realisierung des Multiplexbetriebes für Radbremsen, wo an der Radbremse kein Auslassventil vorgesehen sind, damit auch im Fehlerfall von Ventilen der Druck in der Radbremse abgebaut werden kann. Die Druckversorgung wird an den Ankerteil angeschlossen. Mit einem derartigen Anschluss ist der Differenzdruck am Ventil beim Druckaufbau relativ gering, es muss jedoch bei der Federauslegung des Magnetventils RF berücksichtigt werden, dass die Druckdifferenz nicht dazu führt, dass beim Druckaufbau das Ventil zugedrückt wird, wenn das Volumen von der Druckversorgung DV in die Radbremse gefördert wird. Ein derartig vorteilafter Anschluss ermöglicht Ventile mit großem Öffnungsquerschnitt ÖQ bzw. geringen Strömungsverlusten, ideal für das PPC- und MUX-Druckregelverfahren.

Zusätzlich werden die Verbindungsventile BP1 und BP2 derart angeschlossen, dass Sie über den Druck im Bremskreis selbstöffnend sind und zudem im PWM-Betrieb betrieben werden können. Damit ist eine Druckregelung der Pumpe sowie ein Druckabbau über das Zentralventil ZAV möglich.

Folgende Druckregelverfahren werden bei der erfindungsgemäßen Vorrichtung in einzelnen eingesetzt und führen zu einer sehr hohen Genauigkeit und Verfügbarkeit auch bei Ausfall von Komponenten (Druckversorgung, Sensoren, Bremskreisausfall) und somit zu einer sehr robusten und fehlersicheren Lösung
(1) Druckaufbau in Normalbetrieb ohne signifikante Einflussfaktoren:
   a) Druckaufbau im PPC-Verfahren bis zum Druck p1, max. Radblockierdruck +/- 20% (i.d.R. 80-120 bar) über Kolben-Steuerung der DV1 in Vorwärtsbewegung des Kolbens (Vorwärtsbewegung = Komprimierung des Fluidvolumens in Richtung hydraulischer Verbraucher an der Radbremse) mit Nutzung mindestens eines Druckgebers
   b) Druckaufbau im PPC-Verfahren bis zum Druck p1, max. Radblockierdruck +/- 20% (i.d.R. 80-120 bar) in Vorwärtsbewegung des Kolbens der DV1 mit Nutzung der Signale von Motorstrom, Kolbenweg und Druck-Volumen-Kennlinie ohne Nutzung des Druckgebers
   c) Druckaufbau im MUX-Verfahren bis zum Zieldrücken an d.h. Einstellung eines ersten Raddruckes an mindestens einer Radbremse, Schließen der Schaltventile, gefolgt durch Erhöhung des Druckes an weiteren Radbremsen.
   d) Druckaufbau bis zu unterschiedlichen Zieldrücken über Kolbensteuerung mit eines der Verfahren (1)a - (1c) und Nutzung PWM-Taktung der stromlos offenen Magnetventile zur Regelung von unterschiedlichen Druckverläufen oder Kompensierung unterschiedlicher Strömungswiderstände in den Radbremsen
   e) Kombination von Druckregelverfahren (1c) und 1(d)
   f) Druckaufbau bis zu einem ersten Druck nahe der Radblockiergrenze mit Druckversorgung DV1, weitere Druckerhöhung durch Druckversorgung DV2 bis zum Maximaldruck bei Schließen des Zuleitungsventils der DV1 zu den Bremskreisen
(2) Druckabbau im Normalbetrieb ohne signifikante Einflussfaktoren:
   a) Druckabbau im PPC-Verfahren bis zum Zieldruck über Kolben-Steuerung der DV1 in Rückwärtsbewegung des Kolbens (Rückwärtsbewegung = Dekomprimierung des Fluidvolumens hydraulischer Verbraucher an der Radbremse) mit Nutzung mindestens eines Druckgebers
   b) Druckabbau im PPC-Verfahren bis zum Zieldruck durch Rückwärtsbewegung des Kolbens der DV1 mit Nutzung der Signale von Motorstrom, Kolbenweg und Druck-Volumen-Kennlinie
   c) Druckabbau im MUX-Verfahren bis zum Zieldrücken an Rädern, d.h. Einstellung eines ersten Raddruckes an mindestens einer Radbremse, Schließen der Schaltventile, Erhöhung des Druckes an weiteren Radbremsen
   d) Druckabbau über mindestens ein Auslassventil, wobei über eine Stromregelung im Auslassventil ein bestimmter diskreter weitestgehend konstanter Öffnungsquerschnitt des Magnetventils eingestellt wird, der die Druckänderung bestimmt
   e) Druckabbau bis zu unterschiedlichen Zieldrücken über Kolbensteuerung mit einem der Verfahren (1)a bis (1c) und Nutzung PWM-Ansteuerung von stromlos offener Magnetventile zur Realisierung von unterschiedlichen Druckverläufen und Kompensierung unterschiedlicher Strömungswiderstände in den Radbremsen
   f) Druckabbau in Radbremsen oder Bremskreisen über Auslassventile an den Radbremsen oder Druckabbau in einen oder beiden Bremskreisen über ein zentrales Auslassventil ZAV, insbesondere bei hohen Drücken, die oberhalb der Druckgrenze der Druckversorgung DV1 liegen
   g) Kombination mindestens einer der Druckregelverfahren (1a) bis 1(f)
(3) Druckaufbau im Notbremsbetrieb (AEB-Funktion) mit extremen schnellem Regelbetrieb
   a) Druckaufbau im PPC-Verfahren bis zum Druck p1, max. Blockierdruck (i.d.R. 80-120 bar) über Kolben-Steuerung der DV1 in Vorwärtsbewegung des Kolbens mit maximaler Motorleistung
   b) Verfahren im PPC-Verfahren nach 3(a) mit Kompensation des unterschiedlichen Druckänderung in den Radbremsen durch unterschiedliche Strömungswiderstände zwischen Druckversorgung DV1 und Radbremsen durch PWM-Steuerung von stromlos offenen Magnetventilen zwischen Druckversorgung und Radbremse
   c) Verfahren nach 3(a) mit Kompensation des unterschiedlichen Druckänderung in den Radbremsen durch unterschiedliche Strömungswiderstände zwischen Druckversorgung DV1 und Radbremsen durch teilweise Druckabbau über mindestens ein Auslassventil (AV1, AV2, ZAV)
   d) Verfahren nach 3(a) mit Ergänzung durch MUX-Verfahren zur Kompensation des unterschiedlichen Druckänderung in den Radbremsen durch unterschiedliche Strömungswiderstände zwischen Druckversorgung DV1 und Radbremsen
   e) Verfahren nach 3(a) mit Kompensation des unterschiedlichen Druckänderung in den Radbremsen durch unterschiedliche Strömungswiderstände zwischen Druckversorgung DV1 und Radbremsen durch teilweisen Einsatz der Druckversorgung DV2 zum Druckaufbau in einem Bremskreis
   f) Simultaner oder teilsimultaner Druckaufbau mit DV1 in einem ersten Bremskreis BK1 und Druckaufbau mit DV 2 im zweiten Bremskreis BK2
   g) Druckaufbau mit DV2 und DV1 im MUX-Verfahren simultan oder teilsimultan in beiden Bremskreisen
(4) Gleichzeitiger Druckaufbau und Druckabbau in Normalbetrieb
   a) Druckaufbau bis zum Zieldruck in Vorwärtsbewegung des Kolbens der DV1 in einem Bremskreis, Druckabbau im zweiten Bremskreis über Auslassventile an den Radbremsen (AV1, AV2) oder zentrales Auslassventil (ZAV)
   b) Druckaufbau bis zum Zieldruck in Vorwärtsbewegung des Kolbens der DV1 in beiden Bremskreisen, Druckabbau in einer Radbremse über ein oder mehrere Magnetventil(e) an den Radbremsen bei geschlossenen Schaltventil derjenigen Radbremse, wobei der Druckabbau über Auslassventile erfolgt
   c) Druckaufbau bis zum Zieldruck in Vorwärtsbewegung des Kolbens der DV1 in mehreren Radbremsen im Multiplexbetrieb mit gleichzeitigen Druckabbau über Auslassventile AV1, AV2 an den Radbremsen bei geschlossenen Schaltventil
   d) Druckaufbau bis zum Zieldruck in Vorwärtsbewegung des Kolbens der DV1 in mehreren Radbremsen im Multiplexbetrieb mit gleichzeitigen Druckabbau über Auslassventile AV1, AV2 an den Radbremsen bei geschlossenen Schaltventil
   e) Druckaufbau bis zum Zieldruck in Vorwärtsbewegung des Kolbens der DV1 in mehreren Radbremsen im Multiplexbetrieb mit gleichzeitigen Druckabbau in einem Bremskreis ein zentrales Auslassventil ZAV.
(5)Druckaufbau und Druckabbau im Fehlerfall DV1
   a) Druckaufbau mit DV2 über den gesamten Druckbereich, Druckabbau über in einen oder mehreren Bremskreis(en) über ZAV,
   b) Druckaufbau mit DV2 über den gesamten Druckbereich, Druckabbau in einem oder mehreren Radbremsen eines Bremskreises über AV an der Radbremse
   c) Druckaufbau mit Druckverlaufsregelung mit DV bei gleichzeitiger Öffnung eines oder mehrere Auslassventile (AV1, AV2, ZAV)
   d) Druckregelverfahren nach (5a) bis (5c) und Einsatz PWM-Steuerung bei stromlos offenen Magnetventilen zur Steuerung der Strömungswiderstände im Druckaufbau und Druckabbau
   e) Druckregelverfahren nach (5a) oder (5c) und Einsatz des Drucksensors bei der Druckabbauregelung über Auslassventile
(6) Druckaufbau und Druckabbau im Fehlerfall DV2
   (a) Betrieb des Motors der DV1 mit 1x3 Phasen bei 50% des max. Motormomentes, ermöglicht in der Regel noch eine Verzögerung von 0,4 - 0,6 g
   (b)Nachfördern von Volumen von DV1 aus dem Vorratsbehälter bei Einflussfaktoren wie z.B. Luftblasen, etc.
(7)Ausfall Druckgeber, Nichtverfügbarkeit Druckgeber in einem Bremskreis
   (a) Bremsdruckeinstellung durch Auswertung Motorstrom und Regelung nach einer Verstärkerkennlinie und stromproportionalen Zusammenhang zwischen Motorphasenstrom und Motordrehmoment (Drehmomentkonstante) und insbesondere mechanischen Wirkungsgrad der Getriebeübersetzung
   (b)Bremsdruckeinstellung durch Auswertung Druck-Volumenkennlinie, Kolbenweg direkt oder indirekt über Motorwinkelgeber
   (c) Auswertung Temperatur zur Kompensation/Korrektur der Drehmomentkonstante
   (d)Kombination von Verfahren (7a) bis (7c)

Die oben beschriebenen Druckregelverfahren kommen bei folgenden Funktionen der Bremsanlage wie folgt zum Einsatz:

### (a) Bremsdruckregelung (Normalfunktion, AEB-Funktion)

Bei der Bremskraftverstärkung wird der Druck der Kolben-Zylindereinheit der Druckversorgung DV1 durch PPC-Drucksteuerung durch Vor- und Rückbewegung des Kolbens gesteuert. Wird eine sehr hohe Druckaufbaudynamik gefordert (z.B. Notbremssituation AEB) wird die DV2 vorteilhaft zur Unterstützung der DV1 zum Druckaufbau in einem Bremskreis zugeschaltet. Damit kann die Leistungsanforderung an den Motor der DV1 reduziert werden. Der Druckabbau erfolgt dann über Rückbewegung des Kolbens und/oder über Auslassventile, die vorzugsweise aus Geräuschgründen erst bei kleinen Druckniveaus eingesetzt werden und das zusätzliche der Pumpe DV2 in das System geförderte Volumen wird wieder in den Vorratsbehälter abgeben.

### (b) Drucksteuerung bei Rekuperation von Bremsenergie insbesondere über einen Elektromotor (Rekuperationsbetrieb/Blending)

Auch das Blending (Rekuperation von Bremsenergie über die elektrischen Antriebsmotoren des Fahrzeuges bzw. Elektromotoren in Hybridsystemen, die zur Erzeugung von Bremsmoment genutzt werden können) wird über die Kolben-Zylindereinheit DV1 vorzugsweise abgebildet. In dem in Radbremsen, wo ein Elektromotor Bremsenergie erzeugt wird, ein niedriger Druck eingestellt wird. Hier wird das MUX-Verfahren aus DE 10 2005 055 751 oder DE 10 2009 008 944 eingesetzt, d.h. der Druckaufbau und Abbau wird über den Kolbendruck in der Druckversorgung DV1 durch Vor- und Rückbewegung durch geöffnete Schaltventile gesteuert, wobei Drücke in den Radbremsen durch geschlossene Schaltventilen gehalten werden. Alternativ kann auch Druckauf- und Druckabbau mit PPC-Verfahren erfolgen, wobei die Radbremsen, die aufgrund der Rekuperation einen niedrigen Druck benötigten beim Druckaufbau im PWM-Betrieb betrieben, analog kann das PWM-Verfahren für die Druckverlaufsteuerung beim Druckabbau eingesetzt werden. Diese Verfahren können für Elektromotoren an mindestens eine Achse eingesetzt werden. Die unterschiedlichen Bremsdruckregelung erfolgt bei Schwarz-Weiss Bremskreisen achsindividuell über Mulitplexen oder PPC-Verfahren mit PWM-Steuerung, bei diagonalen Bremskreisen wird das Mulitplexen eingesetzt.

### (c) Drucksteuerung bei Torque Vektoring, Lenkungseingriffen

Torque Vektoring bzw. Lenkungseingriffe spielen eine zunehmende Rolle bei modernen Fahrzeugen, um die Agilität zu verbessern insbesondere in der Kurvenfahrt oder als Backup-Lenkungsfunktion. Das Bremssystem kann für den Lenkungseingriff an der Vorderachse oder Hinterachse eingesetzt werden. An der Vorderachse wird kann eine Redundanz zur elektrischen Servolenkung erzeugt werden und auf eine redundante Ausführung der elektrischen Servolenkung verzichtet werden. An der Hinterachse kann auf eine Hinterachslenkung verzichtet werden und die Agilität einen Fahrzeuges in der Kurvenfahrt erhöht werden

Sind in modernen E-Fahrzeugen Elektromotoren an jedem Rad einer Achse vorgesehen, spielt die Interaktion mit der Bremse eine große Bedeutung in der Regelung des Radmomentes. So kann sowohl durch den Elektromotor am Rad, als auch die Bremse ein Eingriff erfolgen und einer genauen Druckregelung kommt sowohl bei der Beschleunigung, Kurvenfahrt als auch Verzögerung ein hohe Bedeutung zu.

Torque-Vektoring bzw. Lenkungseingriffe erfolgen primär über die Druckversorgungseinrichtung DV1. Hier wird der Vordruck durch die Kolbenzylindereinheit gesteuert und die Drücke an den Radbremsen an einer Achse werden entweder über das Multiplexverfahren nacheinander geregelt oder an verschiedenen Rädern werden über das PPC-Verfahren mit PWM-Steuerung an einer Radbremse unterschiedliche Druckverläufe geregelt. Durch die redundante Ausführung mit 2 Druckversorgungen kann zusätzlich simultan oder teilsimultan ein Eingriff an der Vorderachse und Hinterachse erfolgen, wenn die Bremskreise des Systems eine Schwarz-Weiss-Bremskreisaufteilung haben.

### (d) Regelbetrieb (ABS, ESP)

Im Regelbetrieb (ABS, ESP) wird ebenfalls das MUX-Verfahren eingesetzt, wobei in Extremsituationen mit sehr hohen Druckgradienten (z.B. Bremsung auf hohem Reibwert - high □) der Druckabbau auch über Auslassventile bzw. PWM-Steuerung der BP1 und BP2-Ventile erfolgt. Damit kann der Drehmomentbedarf des Antriebsmotors der DV1 reduziert werden bzw. es herrschen geringere Anforderungen an die Trägheitsmasse des Rotors des Antriebsmotors der DV1. Multiplexverfahren kann im simultanen und teilsimultanen Betrieb vorteilhaft durch PWM-Steuerung unterstützt werden, indem der Vordruck über die Druckversorgung DV1 eingestellt wird. Ferner kann der erweiterte Freiheitsgrad der simultanen Druckregelung mit 2 Druckversorgungen genutzt werden, in dem der Druck in einem Bremskreis bzw. bestimmten Rädern aufgebaut wird und im anderen Bremskreis bzw. anderen Radbremszylindern abgebaut wird.

### (e) Regelbetrieb bei Ausfall einer Druckversorgung

Fällt die DV1 aus, wird die Druckaufbauregelung über die DV2 durchgeführt. Der Druckabbau in der Ausführungsform der zweiten Druckversorgung als Kolbenpumpe erfolgt dann ausschließlich über Auslassventile oder das zentrale ZAV-Ventil. In der Ausführungsform der 2. DV als Zahnradpumpe, kann der Druckabbau über die Zahnradpumpe erfolgen. Für die Druckaufbauregelung einer Kolbenpumpe werden ebenfalls Auslassventile zur Regelung nutzt, z.B. durch teilweises Öffnen im PWM-Betrieb beim Druckaufbau über die DV2. Ist DV2 eine Zahnradpumpe erfolgt die Druckregelung über Strom und Winkelpositionsregelung des Motors der Zahnradpumpe. Leckagen in der Zahnradpumpe werden dabei berücksichtigt und nachgeregelt.

Fällt die DV2 aus, wird ausschließlich über die primäre Druckversorgung DV 1 geregelt nach den oben beschriebenen Druckregelverfahren. Hier gibt es keine Einschränkung in der Funktion. Auch das begrenzte Volumen der Kolben-Zylinder-Einheit ist keine Einschränkung. Hierzu kann aus dem Vorratsbehälter nachgefördert werden. Dies erfolgt in der Form, daß die Druckversorgung von dem Bremskreis getrennt wird durch Schließen des Verbindungsventils. Dann wird der Kolben zurückgefahren und über ein Rückschlagventil wird Volumen aus dem Vorratsbehälter gesaugt. Die Zeitunterbrechung liegt bei ca. 100 ms, was im oberen Druckbereich unkritisch ist, da das Fahrzeug bereits verzögert wird. Für den sehr unwahrscheinlichen Fading-Fall bei gleichzeitigem Ausfall der DV1 ist die Verzögerung durch das max. Drehmoment des Elektromotors begrenzt und muss entsprechend der gesetzlichen Randbedingungen und Ausfallwahrscheinlichkeiten ausgelegt werden. Für diesen äußerst seltenen Fall kann bei E-Fahrzeugen oder Hybridfahrzeugen ein elektrischer Antriebsmotor zur Verzögerung beitragen oder eine elektrische Parkbremse wird aktiviert.

Ist die DV2 ein Zahnradpumpe kann kontinuierlich gefördert werden und es muss nicht wie oben beschrieben nachgefördert werden. Die Druckregelung der Zahnradpumpe erfolgt über Strom und Winkelpositionsregelung des Antriebsmotors der Zahnradpumpe. Leckagen in der Zahnradpumpe werden dabei berücksichtigt und nachgeregelt. Leckagen können z.B. durch Auswertung von Drucksensoren in Bremskreisen bestimmt werden.

Neben der generellen Druckregelung und der Auslegung der zwei Druckversorgungen für unterschiedliche Betriebszustände kommt der hydraulischen Auslegung des Systems zur Erzielung einer sehr hohen Fehlersicherheit eine sehr hohe Bedeutung zu. Dies wird im Folgenden in mehreren Ausführungsformen ausgeführt:
Nachfolgend werden anhand von Zeichnungen verschiedene mögliche Ausführungsformen der Erfindung näher erläutert.

Es zeigen:
- Fig. 1: erste Ausführungsform eines erfindungsgemäßen Hydrauliksystems mit einer fehlersicheren Ventilanordnung zur Verbindung beider Bremskreise, einem Hauptzylinder mit Betätigungseinrichtung sowie zwei Druckversorgungseinrichtungen mit elektronischer Steuer- und Regeleinrichtung als sogenannte Integrierte 1-Box-Anlage;
- Fig. 1a:: Funktion des Bremssystems mit beiden Druckversorgungseinrichtungen;
- Fig. 1b:: Funktion bei Ausfall in einem Bremskreis und/oder des Schaltventils einer Radbremse;
- Fig. 1c:: Funktion des Hydrauliksystems bei Ausfall beider Druckversorgungseinrichtungen;
- Fig. 2:: zweite Ausführungsform des erfindungsgemäßen Hydrauliksystem mit Hauptzylinder als separates Modul;
- Fig.3a: Konstruktive Ausführung der ersten Ausführungsform
- Fig.3b:: Konstruktive Ausführung der zweiten Ausführungsform
- Fig. 4:: dritte Ausführungsform des erfindungsgemäßen Hydrauliksystems mit getrenntem E-Pedal
- Fig. 4a:: Konstruktive Ausführung der dritten Ausführungsform mit E-Pedal
- Fig. 5:: vierte Ausführungsform des erfindungsgemäßen Hydrauliksystems mit 2 Rotationspumpen
- Fig.5a:: Konstruktive Ausführung der vierten Ausführungsform
- Fig. 6a:: Druckaufbauregelung mit beiden Druckversorgungen bei Notbremsfunktion (AEB) im simultanen Betrieb
- Fig. 6b:: Druckaufbaureglung mit beiden Druckversorgungen bei Betrieb bis zu bei hohen Drücken
- Fig. 6c:: Druckaufbauregelung bei Torque Vektoring, Lenkungseingriffen an mindestens einer Achse
- Fig. 6d:: Druckaufbauregelung bei Rekuperationsbetrieb an 2 Achsen mit Druckversorgung DV1
- Fig. 6e:: Druckabbauregelung im Rekuperationsbetrieb an 2 Achsen mit Druckversorgung DV1
- Fig. 6f:: Variante zur Druckabbauregelung im Rekuperationsbetrieb an 2 Achsen mit Druckversorgung DV1
- Fig. 6g:: Druckregelung im Regelbetrieb (ABS) mit simultaner Multiplexsteuerung an 2 Radbremsen und Druckabbau über 2 Auslassventilen an weiteren Radbremsen (2-Kanal MUX-Betrieb mit PWM)
- Fig. 6h:: Druckregelung im Regelbetrieb ABS) mit simultaner Multiplexsteuerung an 2 Radbremsen und Druckabbau über 1 Auslassventilen einer Radbremsen (3-Kanal MUX-Betrieb mit PWM)
- Fig. 6i:: Druckregelung im Regelbetrieb ABS) mit simultaner Multiplexsteuerung an 2 Radbremsen und Druckabbau über 1 zentrales Auslassventil (2-Kanal MUX-Betrieb mit PWM, Druckabbau einer oder mehrerer Radbremsen, 1 Bremskreis über ZAV)

**Fig. 1** zeigt die Grundelemente eines regelbaren Bremssystems bestehend aus Hauptbremszylinder HZ mit Wegsimulator WS und Vorratsbehältnis VB, zwei Druckversorgungseinrichtungen DV1 und DV2, wobei die Druckversorgungseinrichtung DV1 eine elektromotorisch angetriebene Kolben-Zylinder-Einheit und die zweite Druckversorgungseinrichtung DV2 eine einfache 1-kreisige Kolben- oder Zahnradpumpe aufweist. Beide wirken zusammen mit einer Ventilschaltung auf die Radbremszylinder RZ, welche den geregelten Raddruck, z. B. bei ABS, auf die Bremse übertragen. Dies entspricht dem Stand der Technik. Das erfindungsgemäße Hydrauliksystem soll jedoch eine hohe Fehlersicherheit für halbautomatisches (HAD) oder vollautomatisches Fahren (FAD) aufweisen.

Hierzu sollten alle ausfallrelevanten Komponenten berücksichtigt werden, wie z. B. Ventile, Sensoren, Dichtungen, Motoren, Bremskreise. Vorteilhaft sollten daher folgende Komponenten bzw. Hydraulikverbindungen ausfallsicher ausgebildet sein:
(1) Verbindung von der für den ersten Bremskreis vorgesehenen Druckversorgungseinrichtung DV1 zum zweiten Bremskreis BK2;
(2) Verbindung von der für den ersten Bremskreis vorgesehenen Druckversorgungseinrichtung DV2 zum ersten Bremskreis BK 1;
(3) Verbindung von dem Druckraum des Hauptbremszylinders HZ über das Ventil FV hin zu den Bremskreisen BK 1, BK2 über die Ventile BP1 und BP2;
(4) Verbindung von Ventil PD1 und Ventil BP1 zu den Radbremszylindern RZ über die jeweiligen den Radbremsen zugeordneten Schaltventile SV;
(5) Verbindung von Ventil BD2 zu den Radbremszylindern RZ über die jeweiligen den Radbremsen zugeordneten Schaltventile SV;
(6) Verbindung von einem Bremskreis BK1, BK2 hin zum Vorratsbehältnis VB;
(7) Verbindungen zwischen Bremskreisen BK1, BK2 hin zu den Radbremszylindern RZ.

Diese hydraulischen Verbindungen mit möglichen Ausfallfehlern der einzelnen Komponenten werden im Folgenden beschrieben.

Die Druckversorgungseinrichtung DV1 wirkt vom Bremskreis BK1 in den Bremskreis BK2 über die Hydraulikleitungen Leitung 1, VL, VLa und 5 sowie über die Schaltventile SV zu den Radbremsen RB. Im Stand der Technik wird hierzu lediglich ein einziges Bypassventil eingesetzt. Ein Ventilausfall kann hier einen Totalausfall der Bremse bewirken, wenn noch ein schlafender Fehler bei einem weiteren Ventil hinzukommt. Die Erfindung sieht daher zwei redundante Ventile BP1 und BP2 in der Verbindungsleitung VL vor, um die Verbindung hin zum Bremskreis BK2 von der ersten Druckversorgungseinrichtung DV1 zu ermöglichen. Schlafende Fehler der Ventile BP1 und BP2 werden vom Druckgeber erkannt, indem bei Druckänderung die Ventile kurzgeschlossen werden. In dieser Phase muss der Druck konstant bleiben. Bei Ausfall der ersten Druckversorgungseinrichtung DV1, z.B. bei Ausfall einer Kolbendichtung, wird eine Rückwirkung auf Bremskreis BK2 über die drei redundanten Ventile BP1, BP2 und PD1 verhindert. Die Ventile sind vorzugsweise stromlos offene Ventile, damit bei Ausfall der Druckversorgungseinrichtungen DV1, DV2 der Hauptbremszylinder HZ auf beide Bremskreise BK1 und BK2 wirken kann. Wird Druck über das Öffnen der Ventile ZAV oder FV reduziert, so öffnen die beiden Verbindungsschaltventile ohne eigene elektrische Ansteuerung durch den wirkenden Differenzdruck selbstständig. Die beiden Verbindungsventile BP1 und BP2 sind dabei mittels der Verbindungsleitung VLa miteinander hydraulisch verbunden.

Entsprechend wirkt die Druckversorgungseinrichtung DV2 in dem zweiten Bremskreis BK2 über die Hydraulikleitungen 2 und 5 und über die Ventile BP2 und BP1 in die Hydraulikleitung 4 und von dort über die Schaltventile SV zu den Radzylindern RZ. Bei Ausfall des BK in Radbremsen RB sind durch Diagnose zuvor die Ventile SV, BP1 und BP2 geschlossen und verhindern einen Ausfall der Druckversorgung. Hierbei sind alle Ventile z. B. SV, BP1, BP2 sicherheitskritisch als schlafende Fehler zu betrachten, da das die Ventile durchströmende Hydraulikmedium Schmutzpartikel enthält, welche ein Schließen des Ventils verhindern können und die Ventile somit undicht sind. Im vorliegenden Fall kann z.B. bei Ausfall eines Schaltventils SV zwar der eine Bremskreis ausfallen. Der andere Bremskreis ist jedoch durch die Zwischenschaltung der beiden Ventile BP1 und BP2 abgesichert. Es müsste hier ein Dreifachfehler vorliegen, d.h. beide Ventile BP1 und BP2 müssten zusätzlich ausfallen, damit ein Totalausfall vorliegt. Zumindest ein Bremskreis ist somit sicher gegen Doppelfehler geschützt und verhindert einen Totalausfall der Bremse. Sicherheit gegen Doppelfehler, wenn schlafende Fehler auftreten können, ist ein entscheidendes Sicherheitsmerkmal für HAD und FAD. Auch Aufrechterhaltung der Druckversorgung oder des Bremskraftverstärkers bei Bremskreisausfall zählt dazu.

Die Druckversorgungseinrichtung DV2 kann dabei bei schnellen Druckaufbau oder Druckaufbau über 120 bar die andere Druckversorgungseinrichtung DV1 unterstützen und/oder die Druckversorgung bei Fading durch kontinuierliche Förderung und/oder für die ABS-Funktion vornehmen und/oder bei Ausfall der anderen Druckversorgung DV1 dessen Funktion mit übernehmen.

Ebenso ist es möglich, dass die Druckversorgungseinrichtung DV1 den Druckaufbau für Druckbereiche kleiner gleich 120 bar und für die ABS-Funktion übernimmt. Bei Ausfall der Druckversorgungseinrichtung DV2 steht, sofern die Druckversorgungseinrichtung DV2 nur auf einen maximalen Druck von 120 bar ausgelegt ist, nur dieser maximale Druck von 120 bar für beide Bremskreise zur Verfügung.

Bei geschlossenen Verbindungsventilen BP1 und/oder BP2 können die beiden Druckversorgungseinrichtungen DV1 und DV2 in ihren Bremskreisen BK1 und BK2 den Druck unabhängig voneinander einregeln bzw. -stellen.

Die Pedalbewegung wird über redundante Pedalwegsensoren (PS) gemessen, die zugleich auf ein KWS-Messelement nach WO 2012/059175 A1 wirken. Mit dem Signal der Pedalwegsensoren wird die Druckversorgungseinrichtung DV1 angesteuert, wobei die Kolbensteuerung den Volumenfluss in der Hydraulikhauptleitung 1 in dem Bremskreis BK1 und über die redundanten BP1- und BP2-Ventile in den Bremskreis BK2 bewirkt. Die Druckversorgungseinrichtung DV1 kann so ausgelegt werden, dass sie nur bis zum Blockierdruck z. B. 120 bar wirkt. Höhere Drücke liefert dann die Druckversorgungseinrichtung DV2, welche Volumen in den Bremskreis BK2 und über die redundanten Ventile BP1 und BP2 in BK1 fördert. Dabei kann die Druckversorgungseinrichtung DV2 eine kontinuierlich fördernde Pumpe sein. Ist das Bremssystem schlecht entlüftet oder entsteht Dampfblasenentwicklung mit mehr Volumenbedarf, so wird dies über die bekannte Druckvolumenkennlinie (p-v-Kennlinie) erfasst, was zur Folge hat, dass schon bei kleineren Drücken die Druckversorgungseinrichtung DV2 einsetzt. Zur Pedalbetätigung ist noch zu ergänzen, dass diese den Kolben Ko bewegt, welcher über den pedalkraftproportionalen Druck auf den bekannten Wegsimulator WS wirkt und damit die Pedalcharakteristik bestimmt. Der Wegsimulator WS kann üblicherweise über ein Ventil abgeschaltet werden, insbesondere in der Rückfallebene bei ausgefallenen Druckversorgungseinrichtungen. Bei redundanter Druckversorgungseinrichtungen ist dies aufgrund der sehr geringen Ausfallwahrscheinlichkeit nicht mehr relevant.

Über die Leitung 3 kann der Hauptbremszylinder HZ mit den Bremskreisen BK1 oder BK2 verbunden sein, wobei in der Leitung 3 das Ventil FV zum Verschließen derselben angeordnet ist. Diese Verbindung ist nur in der Rückfallebene wirksam. Sofern die Leitung mit der Verbindungsleitung der beiden Schaltventile BP1 und BP2 verbunden ist, bilden die beiden Ventile BP1 und BP2 eine weitere Redundanz. Eine übliche Verbindung vom FV direkt in einen der beiden Bremskreise BK1, BK2 hätte bei undichtem Ventil FV zur Folge, dass der Bremskreis und damit die Druckversorgung auf den HZ-Kolben wirkt, was herkömmlich zum Abschalten der Druckversorgung führt.

Bei Ausfall eines Bremskreises im Radzylinder wird herkömmlich das entsprechende Einlassventil EV oder Schaltventil SV geschlossen, damit wird der ausgefallene Radkreis eliminiert. Ein undichtes EV/SV (schlafender Fehler) bewirkt den Ausfall des Bremskreises oder der gesamten Druckversorgung. Auch hier ist durch die Ventile BP2 und BP1 eine zusätzliche Sicherheit gegeben, so dass die Druckversorgung nicht ausfällt. Ein Ausfall des Bremskreises BK1 aufgrund eines nicht funktionierenden Schaltventils SV bedeutet einen Ausfall der Druckversorgung DV1, wodurch die Druckversorgung aller noch funktionstüchtigen Radbremsen über die andere Druckversorgungseinrichtung DV2 erfolgt.

Ein weiterer Ausfall kann durch einen Fehler des Rückschlagventils RV1 im zweiten Bremskreis entstehen. Der Ausfall der Druckversorgung DV2 kann hier durch ein redundantes RV2 verhindert werden. Eine Drossel Dr nach dem RV2 mit kleinem Druckfluss ermöglicht die Diagnose z. B. über Druckabfall.

Für die ABS-Regelung oder zur Druckreduzierung mit der zweiten Druckversorgungseinrichtung DV2 ist ein zentrales Auslassventil ZAV notwendig. Der Volumenfluss geht dabei zusätzlich über die Ventile BP1 oder BP2, so dass ein undichtes ZAV nicht kritisch für den Normalbetrieb ist, da bei Ausfall des zentralen Abführventils ZAV die Drucksteuerung über Druckversorgungseinrichtungen DV1 und DV2 erfolgt. Außerdem wird der Fehler, auch schlafend, von ZAV gleich durch Druckänderung oder erhöhte Volumenförderung der Druckversorgungseinrichtung DV1 erkannt. Bei normaler Bremsung bis ca. 120 bar wirkt die Druckversorgung DV über offene Ventile BP1 und BP2 in beide BK. Für extreme Sicherheitsanforderungen kann auch ein red. Abführventil ZAVr in der Leitung zum Vorratsbehälter VB eingebaut werden.

Eine Druckreduzierung ohne Betätigung der Druckversorgungseinrichtung DV1, ist durch Ansteuerung des zentralen Auslassventils ZAV möglich. Bei geöffneten Ventile BP1 und BP2 kann, bei geöffneten Ventilen SV, durch Öffnung des zentralen Auslassventils ZAV der Druck in den Radzylindern RB1, RB2, RB3 und RB4 reduziert werden. Dabei ist es vorteilhaft, die Förderleistung der Druckversorgungseinrichtung DV2 zu stoppen oder zu reduzieren. Die zeitliche Druckabbaugradienten in den Radzylindern RB1, RB2, RB2 und RB4 werden dabei unter anderem von der Geometrie des zentralen Auslassventils ZAV bestimmt. Eine Möglichkeit, diese Druckabbaugradienten zu beeinflussen, bietet die Pulsweitenmodulation, PWM, der elektrischen Spannung in der Ansteuerung der Ventile BP1 und BP2. Sollen die Druckabbaugradienten in den Radzylinder RB1 und RB2 kleiner sein als bei voll geöffnetem Ventil BP1, so wird, bei geöffnetem zentralen Auslassventil ZAV, das Ventil BP1 mit PWM so angesteuert, dass die Druckabbaugradienten denen der Sollwerte entsprechen oder nahekommen. Dabei kann mit dem Drucksensor DG2 die Regelgüte der Druckreduzierung verbessert werden. Alternativ können durch PWM Ansteuerung der Ventile SV in BK1, bei geöffneten Ventilen BP1 und ZAV, die Druckabbaugradienten in den Radzylindern RB1 und RB2 individuell eingestellt werden. Ähnliches gilt für die Druckabbaugradienten in den Radzylindern RB3 und RB4. Sollen die Druckabbaugradienten in den Radzylinder RB3 und RB4 kleiner sein als bei voll geöffnetem Ventil BP2, so wird, bei geöffnetem zentralen Auslassventil ZAV, das Ventil BP2 mit PWM der elektrischen Spannung so angesteuert, dass die Druckabbaugradienten, denen der Sollwerte entsprechen oder nahekommen. Dabei kann mit dem Drucksensor DG die Regelgüte der Druckreduzierung verbessert werden. Alternativ können durch PWM Ansteuerung der Ventile SV in BK2, bei geöffneten Ventilen BP2 und ZAV, die Druckabbaugradienten in den Radzylindern RB3 und RB4 individuell eingestellt werden. Damit sind sehr komfortable und geräuscharme Bremsungen des Fahrzeugs, auch ohne Betätigung der Druckversorgungseinrichtung DV1 realisierbar. Sind radindividuelle Druckabbaugradienten in den Radzylindern erforderlich, z.B. bei Torque Vectoring im Rekuperationsbetrieb, dann können diese, bei geöffnetem zentralen Auslassventil ZAV, im bekannten Multiplexverfahren mit der PWM-Ansteuerung der Ventile BP1 und BP2 und durch Schaltung der Ventile SV realisiert werden. Eine weitere Möglichkeit in der Realisierung dieser radindividuellen Druckabbaugradienten bietet die PWM der SV-Ansteuerung bei offenen Ventilen BP1, BP2 und ZAV. Damit können simultane Druckabbauten mit individuellen Druckabbaugradienten für jeden Radzylinder RB1, RB2, RB3 und RB4 durchgeführt werden. Alternativ zu den PWM-Ansteuerungen der Ventile können auch Stromregelungen für die Ventilansteuerungen eingesetzt werden.

Ausfallursachen im Hauptbremszylinder HZ und Wegsimulator WS sind normalerweise die Dichtungen. Beim Hauptbremszylinder HZ kann eine zusätzliche Dichtung D3 mit Drossel in der Rücklaufleitung zum Vorratsbehälter VB eingesetzt werden, um den Ausfall einer Dichtung frühzeitig diagnostizieren zu können. Damit ist eine Undichtheit über eine kleine zusätzliche Pedalbewegung über die Pedalhubsensoren erkennbar. Zu berücksichtigen ist die geringe Beanspruchung bei HAD und FAD.

Zur Diagnose der Dichtungen ist bei vielen Systemen in der Rücklaufleitung ein stromlos offenes Magnetventil eingeschaltet, welches zur Diagnose geschlossen wird. Hierbei wird von der Druckversorgungseinrichtung DV1 über die Ventile PD1, BP1 und EV Druck in den Hauptbremszylinder HZ geleitet. Die Diagnose erfolgt über Druckänderung bei konstanter Kolbenposition oder Änderung der Kolbenposition bei konstantem Druck. Als Alternative kann hier auch eine Kombination aus Drossel- und Rückschlagventil kostensparend eingesetzt werden. Die Drossel ist so bemessen, dass ein Leckfluss durch die Dichtung nur geringfügig zur Pedalverlagerung innerhalb einer normalen Bremszeit von ca. 10 sec. führt.

Dieselbe Lösung wird auch beim WS-Kolben mit redundanter Dichtung eingesetzt, Diagnose wie o. g. bei D3 über die Pedalbewegung. Hinzu kommt noch, dass eine Steuerung der Bremskraftverstärkung auch bei diesen ausgefallenen Dichtungen noch möglich ist, allerdings mit veränderter Pedalcharakteristik. Auch hier gilt eine extrem kleine Ausfallrate für den Ausfall von zwei Dichtungen fast im Bereich <10⁻¹⁰/Jahr. Auch die Druckversorgungseinrichtung DV1 kann mit redundanten Dichtungen, wie beim Hauptbremszylinder HZ zuvor beschrieben, ausgerüstet werden mit D6 mit Drossel zwischen D6 und D5. Wenn das Saugventil direkt mit dem Anschluss an PD1 verbunden wird, dann setzt das Ansaugen unmittelbar beim Rückhub des Kolbens ein, mit dem Vorteil, dass auch bei tiefen Temperaturen eine hohe Saugleistung gegeben ist. Ein Ausfall, Undichtheit des SV bewirkt im Grenzfall Ausfall der DV. Ein Kompromiss liegt in dem Anschluss des SV bei ca. 60 % des Hubes. Damit ist 40% des Hubes ohne Auswirkung eines undichten SV möglich und zugleich eine Saugwirkung im normalen Temperaturbereich. Mit kleiner o. g. Einschränkung ist durch Redundanz die Volumenförderung des Kolbens gesichert. Weiterhin kann der Motor über eine redundante 2x3-Phasen-Wicklung angesteuert werden, so dass die DV nur durch blockierendes KGT ausfallen.

Die ABS-Funktion über Multiplexbetrieb MUX und der Druckversorgungseinrichtung DV1 erfolgt wie in WO 2006/111393 A1 beschrieben. Erweiterte MUX-Funktionen ergeben sich durch ein zentrales Abführventil ZAV. Ist beim Druckaufbau p_{auf} im Bremskreis BK1 gleichzeitig ein Druckabbau p_{ab} im anderen Bremskreis BK2 notwendig, so erfolgt dieser über das Abführventil zentrale ZAV und gleichzeitig geschlossenem Ventil BP1. Dadurch ist das Multiplexsystem MUX nur durch zwei Radbremsen RB1, RB2 im Bremskreis BK1 belastet, d. h. es kann nicht zugleich ein Druckaufbau Pauf und Druckabbau Pab in den Radbremsen RB1 und RB2 des Bremskreises BK1 erfolgen. Alternativ kann auch ein Abführventil AV1, AV2 im jeweiligen Bremskreis zum Druckabbau p_{ab} zur Entlastung des MUX verwendet werden. Dabei kann das Abführventil AV1, AV2 entweder zwischen dem Schaltventil SV und einem Verbindungsschaltventil BP1, BP2 oder aber zwischen der Radbremse und dem zugehörigen Schaltventil SV angeordnet bzw. angeschlossen werden, so dass ein direkter Druckabbau Pab über das Abführventil hin zu einem Vorratsbehälter VB erfolgen kann. Dies ist insbesondere zum Druckabbau Pab in den Vorderrädern sinnvoll. Das zentrale Abführventil ZAV wird bei dieser Alternative nicht benötigt.

Die ABS-Funktion mittels der zweiten Druckversorgungseinrichtung DV2 erfolgt in diesem Fall leicht eingeschränkt, insbesondere kein Pauf bei Pab. Eine voll individuelle ABS-Regelung ist trotzdem möglich. Zu berücksichtigen ist der seltene Einsatz der Druckversorgungseinrichtung DV2 bei Drücke größer 120 bar und bei Ausfall der ersten Druckversorgungseinrichtung DV1.

Typisch ist für den o. g. MUX-Betrieb die Druckregelung auch bei ABS über die Volumenmessung und über die Kolbenbewegung der Druckversorgungseinrichtung DV1, auch unter Berücksichtigung der Druck-Volumen-Kennlinie (p-V-Kennlinie). Bei einer einfachen Exzenterkolbenpumpe kann dies nicht über die Kolbenbewegung, jedoch über die Förderzeit = Volumen bei zusätzlicher Drehzahlmessung und ggfs. Druckmessung erfolgen. Somit ist auch eine Volumenzumessung für den Druckaufbau möglich. Vorteilhaft ist hier beim Druckaufbau p_{auf} ein serieller und nicht gleichzeitiger Druckaufbau p_{auf} in den einzelnen Radbremsen. Zu berücksichtigen ist dabei die Ventildimensionierung und der Staudruck am Ventil, insbesondere bei den Ventilen BP1 und BP2 bei schnellem Druckaufbau in den Radkreisen. Der Staudruck von o. g. Ventilen wirkt als Druckdifferenz zwischen den Bremskreisen BK1 und BK2. Dieser kann erheblich reduziert werden, wenn in diesem Betriebszustand beide Druckversorgungseinrichtungen DV1 und DV2 eingeschaltet werden. Hier bietet sich auch eine einkreisige Zahnradpumpe anstelle einer Kolbenpumpe an. Hierbei kann der Druckabbau p_{ab} und Druckaufbau p_{auf} auch über die Zahnradpumpe erfolgen. Hierzu ist anstelle des Rückschlagventils RV ein nicht gezeichnetes Ventil MV in der Rückleitung zum Vorratsbehälter VB notwendig. Damit ist auch mit der zweiten Druckversorgungseinrichtung DV2 ein voller MUX-Betrieb möglich.

Die Steuer- und Regeleinrichtung ECU ist Bestandteil des gesamten Systems und des Packagings. Für eine fehlersichere Funktion ist eine redundante oder teilredundante ECU notwendig. Diese teilredundante ECU kann auch für bestimmte Funktionen zusätzlich zur redundanten ECU verwendet werden. In jedem Fall sind bzw. sollten die Ventile redundant über getrennte Ventiltreiber und Trennschalter angetrieben, der einen ausgefallenen Ventiltreiber abschaltet.

Zur Redundanz der Steuer- und Regeleinrichtung ECU ist auch ein redundantes Bordnetzanschluss notwendig. Auch kann ein Anschluss mit 48V für den Anschluss der Motoren verwendet werden. Vorteil bei 48V ist eine höhere Dynamik. Bei Ausfall des Motors von der Druckversorgungseinrichtung DV1 bei 48V ist Notbetrieb mit 12V mit ca. 50% Leistung gegeben mit red. Dynamik und Kostenersparnis. Hierzu ist eine Auslegung des Motors auf z.B. 24V notwendig.

Vorzugsweise wird im Bremskreis BK2 ein Druckgeber DG, ggf. auch in BK1 eingesetzt. Bei Ausfall des Druckgebers kann eine Druckregelung über die Strommessung der Motoren und Positionssteuerung des Kolbens über die p-v-Kennlinie erfolgen.

Alternativ kann die hydraulische Verbindung von der Druckversorgungseinrichtung des Bremskreises BK2 - wie in Figur 1b dargestellt und mit X bezeichnet - mit der inneren Verbindungsleitung VLa der Ventile BP1 und BP2 erfolgen. Bei dieser Alternative wirkt die Druckversorgungseinrichtung DV2 nicht mehr direkt in den Bremskreis BK2. Dies hat einen Vorteil bei einem Ausfall der Ventile BP2, SV und der Druckversorgungseinrichtung DV1. Hier kann der Ausfall von DV1 und DV2 vermieden werden, indem DV2 bei geschlossenem BP2 und PD1 in den Bremskreis BK1 wirkt. Zu berücksichtigen sind aber Dreifachfehler mit einer minimalen Ausfallwahrscheinlichkeit von ca. <5-10⁻¹⁸/Jahr mit Vergleich zum Ausfall Radkreis mit <5-10⁻⁶/Jahr, d.h. bei einer Million Fahrzeuge 5 Fehler pro Jahr. Verschiedene Nachteile stehen dagegen, z. B. bei Ausfall des Ventils FV (z.B. undicht), erfolgt auch Ausfall der Druckversorgung im Bremskreis BK2.

In der Druckleitung einer Druckversorgungseinrichtung DV1, DV2 kann ein Überdruckventil ÜV1, ÜV2 zum Schutz des Antriebes, insbesondere der Spindel und/oder des Kugelgewindetriebes, angeordnet sein, welches z.B. bei ca. 120 bar öffnet.

**Fig. 1a** zeigt die Funktion der Druckversorgungseinrichtungen DV1 und DV2 beim Druckaufbau p_{auf} und Druckabbau p_{ab}. Der Kolben der DV1 erzeugt das Volumen, das über das PD1-Ventil in den Bremskreis BK1 und über BP1 und BP2 in den Bremskreis BK2 gelangt. Der Druck wird über den Druckgeber DG gemessen. Zum Druckabbau p_{ab} bewegt sich der Kolben zurück mit entsprechender Rückströmung des Volumens. Bei höheren Drücken oder Ausfall von DV1 setzt die DV2 ein und fördert das Volumen direkt in Bremskreis BK2 und über die Ventile BP2 und BP1 in BK2, PD1 ist geschlossen. Der Druckabbau p_{ab} kann über die Druckversorgungseinrichtung DV1 erfolgen, wobei das Volumen von größer als 120 bar über das Schnüffelloch abströmt. Alternativ kann der Druckabbau p_{ab} über das zentrale Abführventil ZAV erfolgen. Auch hier erfolgt die Druckmessung und -regelung über den Druckgeber DG. Bei Ausfall des Druckgebers DG kann auch die Strom- und Wegmessung des Kolbens als Ersatzsignal verwendet werden.

Ein weiterer Vorteil ist die Möglichkeit zur Unterstützung der Parkierbremse EPB beim Parken. Mittels einer oder beiden Druckversorgungseinrichtungen DV1 und DV2 kann eine Vorspannung in der Parkierbremse erzeugt werden, so dass deren Elektromotor in Leistung und Moment reduziert ausgelegt werden kann. Aufgrund redundanter Druckversorgungseinrichtungen ist diese Anwendung ausreichend fehlersicher.

**Fig. 1b** zeigt die Auswirkung von Fehlern / Ausfall. Bei Ausfall des Bremskreises BK1 im Radzylinder oder Zuleitung wird das Schaltventil SV geschlossen. Bei Doppelfehler in der Radbremse und im Schaltventil SV fällt BK1 aus und über die Druckversorgungseinrichtung DV2 wird Druck im Bremskreis BK1 erzeugt. Analog bei Ausfall einer Radbremse RB und/oder Ventils SV im Bremskreis BK2. Dann erzeugt die Druckversorgungseinrichtung DV1 den Druck im BK1. Hierbei ist die Sicherheitsfunktion der redundanten Ventile BP1 und BP2 von großer Bedeutung.

**Fig. 1c** zeigt die Wirkung bei Ausfall beider Druckversorgungseinrichtungen DV1 und DV2, z. B. bei Bordnetzausfall. Hier wird der Druck über die Pedalbetätigung und Kolben erzeugt. Das Volumen gelangt über die Ventile FV, BP1 in BK1 und FV, BP2 in BK2 und WS. Zu erwähnen ist der ausfallsichere Hauptbremszylinder HZ mit den redundanten Dichtungen, was das Potenzial hat, die Anforderungen an die Redundanz des Bordnetzes zu verringern, um Kosten zu sparen. Hierbei kann eine Teilredundanz in der ECU für verschiedene Funktionen wie z. B. vereinfachte ABS-Regelung eingesetzt werden.

Die Ausführungen zeigen, dass durch konsequenten Einsatz von Redundanz mit Diagnose der schlafenden Fehler bei Undichtheit eine außerordentliche Fehlersicherheit gegeben ist. Durch die optimierte Ventilanordnung ergibt sich weniger Aufwand als konventionell und ein ausfallsicheres System. Doppelfehler mit gleichzeitigem Auftreten sind extrem selten, d.h. im Bereich von 10-9/Jahr. Bei extrem wichtigen Doppelfehlern wie Bremskreisausfall in der Radbremse oder im Schaltventil SV ist sogar der Totalausfall der Bremse vermeidbar, da noch ein Bremskreis voll wirksam zur Bremskraftverstärkung zur Verfügung steht.

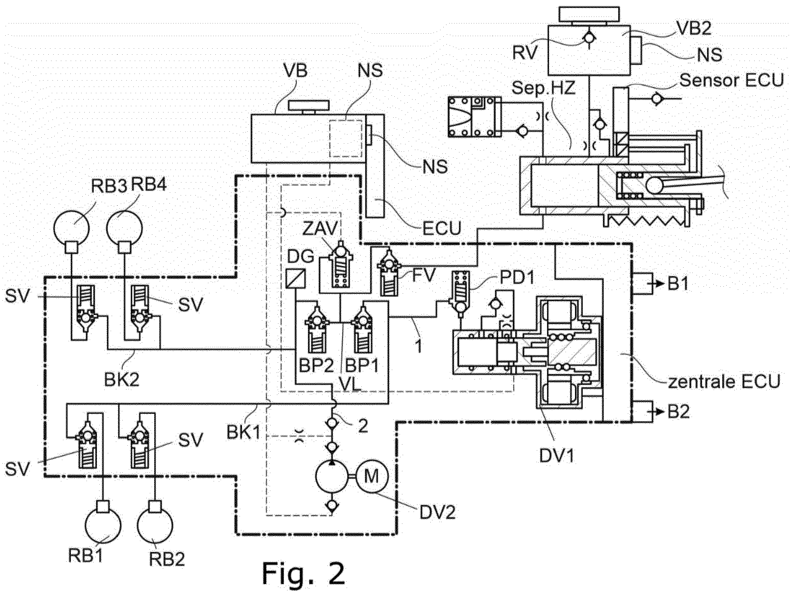

**Fig. 2** zeigt die eingangs erwähnte Möglichkeit der modularen Bremsweise mit separatem Hauptbremszylinder HZ zum Hauptaggregat, was Vorteile beim Einbau und der Geräuschübertragung zur Spritzwand bringt. Nachteilig ist ein getrennter Vorratsbehälter ggf. mit Niveaugeber und kleiner ECU zur Aufnahme der Sensorsignale und Übertragung der Signale zur zentralen ECU.

Ein weiteres Problem entsteht, wenn zur Diagnose des Hauptbremszylinders HZ zusätzliches Volumen von der Druckversorgungseinrichtung DV1 über die Drossel in den Vorratsbehälter VB2 gelangt. Lösung hierfür ist die Diagnose bei kleinem Druck < 5 bar. Bei der ohnehin für die Diagnose notwendigen Druckmessung ist keine Druckreduzierung ein Indiz, dass der Vorratsbehälter VB bereits voll ist. Hierbei hat der Deckel des VB ein RV integriert. Weiterhin wird nach der Diagnose ein bestimmtes Volumen von der DV aus dem VB abgesaugt. Somit kann der zusätzliche Niveausensor NS eingespart werden und eine Diagnose des HZ ist möglich.

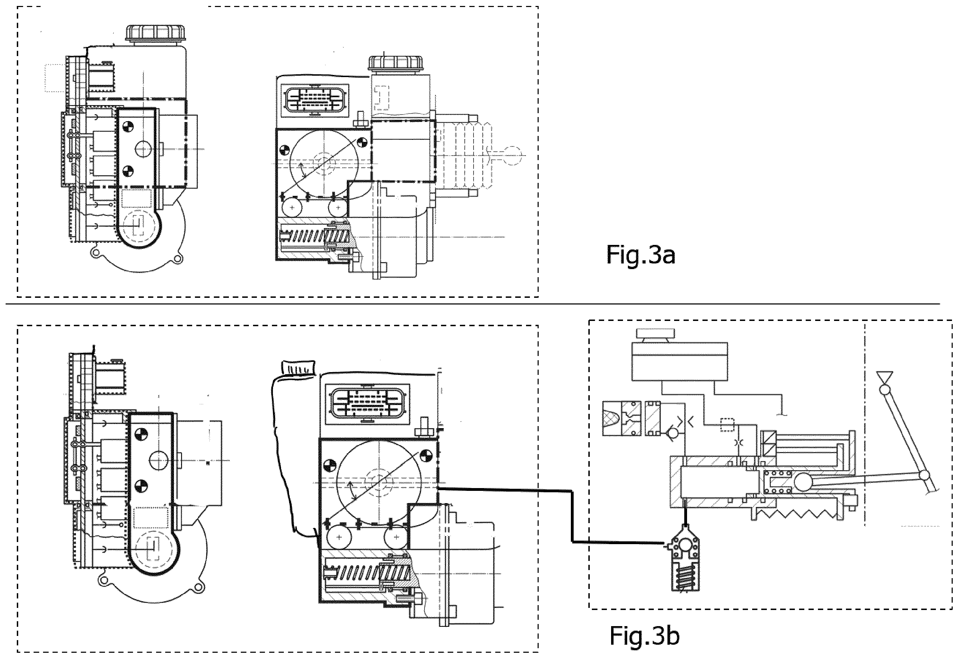

**Fig.3a** zeigt die konstruktive Ausführung der ersten und zweiten Ausführungsform als sog. 1-Box-System mit Anbringung der Betätigungseinheit an der Druckversorgung.

**Fig.3b** zeigt die konstruktive Ausführung der dritten Ausführungsform als sog. aufgelöstes System, wo Druckversorgung und Betätigungseinheit getrennt sind und über eine hydraulische Leitung verbunden sind. Gegenüber Fig.3a hat diese Ausführungsform den Nachteil, dass die Kosten höher sind und eine fehleranfällige Hydraulikleitung erforderlich ist, dahingegen den Vorteil, dass ein minimaler Platzbedarf an der Spritzwand ist und Geräuschquellen an der Spritzwand minimiert werden können. Zudem stellt diese Ausführungsform eine Grundlage für eine Lösung mit E-Pedal.

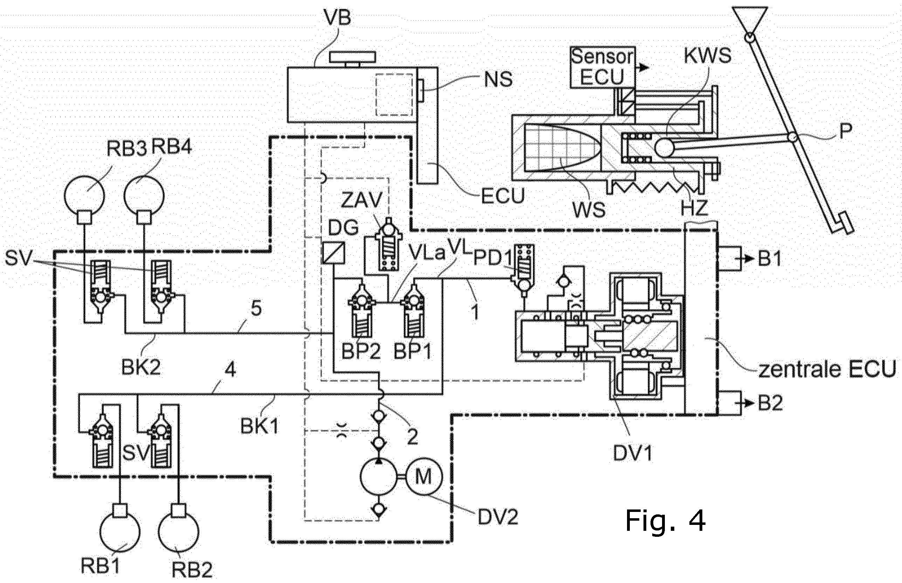

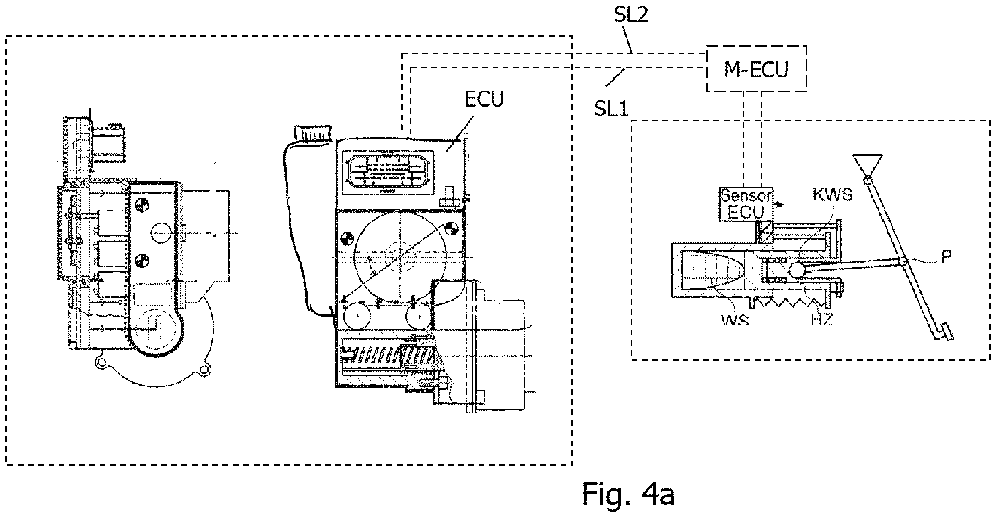

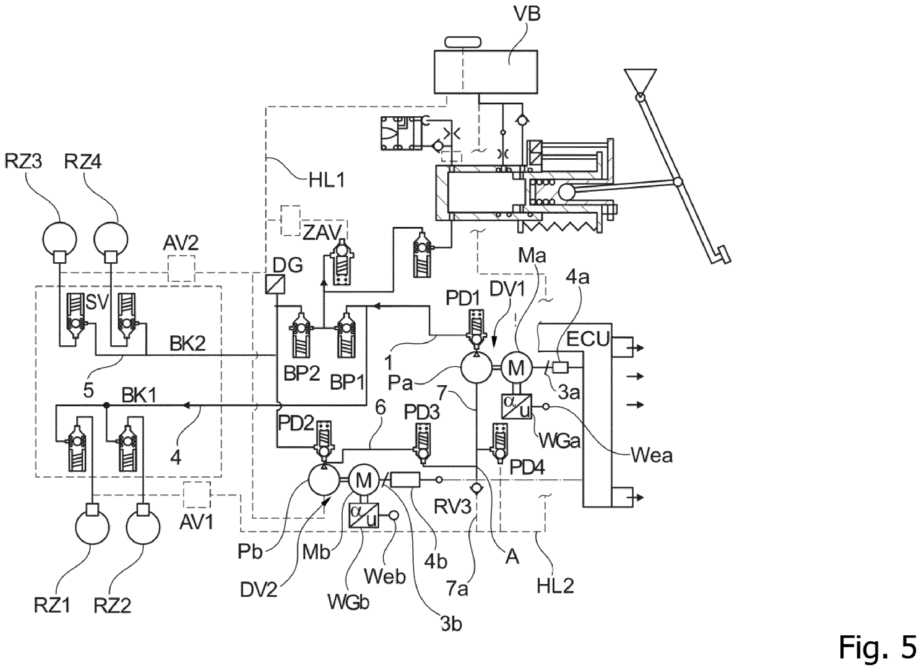

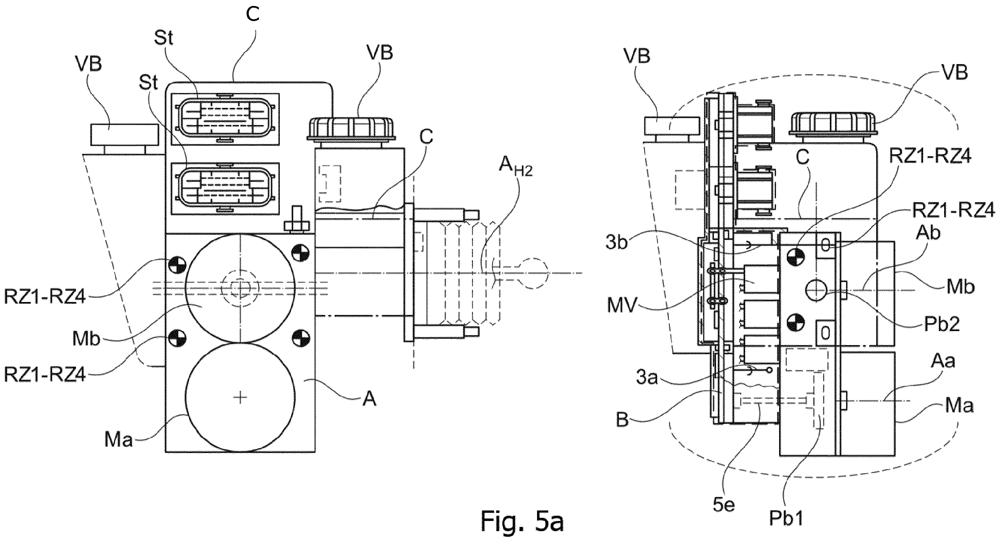

**Fig. 4** zeigt die vierte Ausführungsform des erfindungsgemäßen Hydrauliksystems mit getrenntem E-Pedal. die Druckversorgungseinrichtungen DV1 und DV2 mit Ventilanordnung. Hierbei ist ein elektr. Bremspedal, ein sog. E-Pedal, mit WS-Pedalwegsensoren mit kleiner Sensor-ECU und KWS ohne hydraulisch wirkenden Hauptbremszylinder HZ in einem Aggregat zusammengefasst sind. Dies hat Vorteile, wenn das Einbauvolumen im Aggregateraum klein ist oder die Geräuschanforderungen hoch. Anstelle des HZ mit Vorratsbehälter VB (nicht ausgeführt in Fig. 5) kann auch die Anordnung mit Pedalbetätigung mit WS sog. E-Pedal eingesetzt werden. Die Signale der Pedalwegsensoren werden in einer Sensor-ECU aufgearbeitet und der zentralen ECU zugeführt. Auch kann für Level 5 alternativ zum E-Pedal ein Bremsschalter eingesetzt werden.

Das o.g. Aggregat besitzt den 2-Kreis-VB mit Schwimmer und Niveausensor NS, der in der zentralen Steuer- und Regeleinheit ECU integriert sein kann. Dieser Niveausensor NS soll ebenfalls redundant ausgebildet sein und stetig das Niveau messen, da hierüber ein Volumenverlust durch Leck schnell erfasst wird. Da hier die Verbindung zum Hauptbremszylinder HZ fehlt und damit auch die Rückfallebene zum Hauptbremszylinder HZ bei dem Ausfall beider Druckversorgungseinrichtungen DV1 und DV2 und/oder des Bordnetzes, sind die Ventile BP1 und BP2 vorzugsweise als stromlos offene Ventile ausgeführt.

**Fig.4a** zeigte die Konstruktive Ausführung der vierten Ausführungsform. Hier ist ein E-Pedal ohne Hydraulik und die Druckversorgung als separate Einheit. Der Fahrerwunsch der Sensor ECU wird über redundante Signalleitungen SL1 und SL2 an die Druckversorgung übertragen. Die Ausführungsform ist nur einen kleinen Schritt entfernt von einer Lösung für AD5, wo die Betätigungseinheit komplett wegfällt und der Solldruck über eine zentrale Steuereinheit eines fahrerlosen Fahrzeuges vorgegeben wird.

**Figur 5** zeigt die Grundelemente eines regelbaren Bremssystems für Fahrzeuge, bestehend aus dem Hauptbremszylinder SHZ mit Wegsimulator WS und Vorratsbehältnis VB sowie zwei Druckversorgungseinrichtungen DV1 und DV2. Die Druckversorgungseinrichtung DV1 weist ihrerseits die Rotationspumpe Pa, den bürstenlosen Gleichstrommotor Ma, den Rotorwinkelgeber WGa von Motor Ma mit elektrischem Anschluss Wea, den Wicklungsanschluss 3a von Gleichstrommotor Ma sowie den Shunt 4a vom Gleichstrommotor Ma auf. Die Druckversorgungseinrichtung DV2 weist die Rotationspumpe Pb, den Gleichstrommotor Mb, den Wicklungsanschluss 3b von Gleichstrommotor Mb sowie den Shunt 4b vom Gleichstrommotor Mb auf. Beide Rotationspumpen Pa und Pb der beiden Druckversorgungseinrichtungen DV1 und DV2 sind, insbesondere 1-kreisige, Rotationspumpen. Die Rotationspumpe Pa kann bevorzugt eine Zahnradpumpe sein. Die Rotationspumpe Pa der Druckversorgungseinrichtung DV1 wird bevorzugt von einem bürstenlosen Gleichstrommotor (EC-Motor) Ma angetrieben, während die Rotationspumpe Pb der Druckversorgungseinrichtung DV2 von einem Gleichstrommotor Mb, vorzugsweise mit Bürsten, angetrieben wird. Die Rotationspumpe Pb kann eine einfache 1-kreisige Zahnradpumpe oder eine 1-kreisige Kolbenpumpe sein.

Die Druckversorgungseinrichtung DV1 ist für den üblichen Blockierdruck ausgelegt, wobei unter Blockierdruck der minimale Druck verstanden wird, bei dem alle Fahrzeugräder blockieren. Üblich ist für die meisten Fahrzeuge ein Blockierdruck von 120bar. Durch überhitzte Bremsen (Fading) oder durch Überladung des Fahrzeugs, kann der Blockierdruck ansteigen, so dass der maximale Druck, der mit der Druckversorgungseinrichtung DV1 erreicht werden kann, z.B. 120bar, nicht zum Blockieren aller Fahrzeugräder ausreicht. Aus diesem Grund ist die Druckversorgungseinrichtung DV2 für höhere Drücke als die Druckversorgungseinrichtung DV1 ausgelegt, z.B. für 200bar. Beide Druckversorgungseinrichtungen DV1 und DV2 können einzeln oder zusammen den Radbremszylinderdruck erzeugen, welcher mittels geeigneter Ventilstellungen einer Ventilschaltung auf die Radbremszylinder RZ1, RZ2, RZ3, RZ4, z. B. bei ABS, in den jeweiligen Radbremszylindern eingestellt bzw. eingeregelt wird. Dies ist im Prinzip Stand der Technik. Die erfindungsgemäße Druckversorgungseinheit für ein Hydrauliksystem oder Bremssystem soll jedoch eine hohe Fehlersicherheit z.B. für Hochautomatisiertes (HAD) oder Vollautomatisiertes Fahren (FAD) aufweisen. Hierzu sollten alle ausfallrelevanten Komponenten berücksichtigt werden, wie z. B. Ventile, Sensoren, Dichtungen, Motoren und Bremskreise. Vorteilhaft sollten daher folgende Komponenten bzw. Hydraulikverbindungen ausfallsicher ausgebildet sein:
(1) Verbindung von der für den ersten Bremskreis BK1 vorgesehenen Druckversorgungseinrichtung DV1 zum zweiten Bremskreis BK2;
(2) Verbindung von der für den zweiten Bremskreis BK2 vorgesehenen Druckversorgungseinrichtung DV2 zum ersten Bremskreis BK1;
(3) Verbindung von dem Druckraum des Hauptbremszylinders SHZ über das Schaltventil FV hin zu den Bremskreisen BK1, BK2 über die Bypassventile BP1 und BP2;
(4) Verbindung von Schaltventil PD1 und Bypassventil BP1 zu den Radbremszylindern RZ1 und RZ2 über die jeweiligen den Radbremsen zugeordneten Schaltventile SV
(5) Verbindung von Bypassventil BP2 zu den Radbremszylindern RZ3 und RZ4 über die jeweiligen den Radbremsen zugeordneten Schaltventile SV;
(6) Verbindung von einem Bremskreis BK1, BK2 hin zum Vorratsbehältnis VB;
(7) Verbindungen zwischen Bremskreisen BK1, BK2 hin zu den Radbremszylindern RZ.

Diese hydraulischen Verbindungen mit möglichen Ausfallfehlern der einzelnen Komponenten werden im Folgenden beschrieben.

Die Druckversorgungseinrichtung DV1 wirkt vom Bremskreis BK1 in den Bremskreis BK2 über die Hydraulikleitungen 1, 2 und 5 und über die Schaltventile SV zu den Radbremszylinder RZ1, RZ2, RZ3, RZ4. Im Stand der Technik wird hierzu lediglich ein einziges Bypassventil eingesetzt. Ein Ausfall des einzigen Bypassventils kann hier einen Totalausfall der Bremse bewirken, wenn noch ein schlafender Fehler bei einem weiteren Ventil hinzukommt. Unter "schlafender Fehler" wird ein Einzelfehler verstanden, der sich bei der Bremsung nicht auswirkt, der sich aber in Kombination mit einem anderen Fehler bei der Bremsung wohl auswirken kann. Die Erfindung sieht daher zwei redundante Bypassventile BP1 und BP2 vor, um die Verbindung hin zum Bremskreis BK2 von der ersten Druckversorgungseinrichtung DV1 zu ermöglichen. Schlafende Fehler der Bypassventile BP1 und BP2 werden mittels Druckgeber DG erkannt, indem während einer Druckänderung durch die Druckversorgungseinrichtung DV1, die Bypassventile BP1 und BP2 abwechselnd nacheinander über eine kurze Zeitdauer geschlossen werden. Während der Schließphase von Bypassventil BP1 oder Bypassventil BP2 muss der Druck in Bremskreis BK2 konstant bleiben. Bei Ausfall der ersten Druckversorgungseinrichtung DV1, z.B. bei Ausfall des Gleichstrommotors Ma, wird eine Rückwirkung auf Bremskreis BK2 über die zwei redundanten Bypassventile BP1, BP2 und das Schaltventil PD1 verhindert. Die Bypassventile BP1 und BP2 sind vorzugsweise stromlos offene Ventile, damit bei Ausfall der Druckversorgungseinrichtungen DV1 und DV2 der Hauptbremszylinder SHZ über das offene Schaltventil FV auf beide Bremskreise BK1 und BK2 wirken kann. Soll der Druck in den Radbremszylindern RZ1, RZ2, RZ3 und RZ4 reduziert werden so kann dies durch das Öffnen der Schaltventile ZAV oder FV erfolgen. Dabei können die beiden Verbindungsschaltventile bzw. Bypassventile BP1 und BP2 ohne eigene elektrische Ansteuerung, durch den wirkenden Differenzdruck über diese Bypassventile BP1 und BP2 selbstständig öffnen, wodurch im Fehlerfall, z.B. bei Ausfall der Ansteuerelektronik der beiden Bypassventile BP1 und BP2, sichergestellt ist, dass ein Druckabbau möglich ist und z.B. ein Blockieren der Räder sicher verhindert wird.

Entsprechend wirkt die Druckversorgungseinrichtung DV2 in dem zweiten Bremskreis BK2 über die Hydraulikleitungen 2 und 5 und über die Schaltventile SV zu den Radbremszylindern RZ3 und RZ4, und über die Bypassventile BP2 und BP1 in die Hydraulikleitung 4 und von dort über die Schaltventile SV zu den Radbremszylindern RZ1 und RZ2. Ein Ausfall des Bremskreises BK1, z.B. durch Undichtigkeit einer Dichtung in einem der Radbremszylinder RZ1, RZ2, kann durch Diagnose mittels eines der Schaltventile SV in Bremskreis BK1 erkannt werden, wobei dann die Bypassventile BP1 und BP2 geschlossen werden, womit ein Ausfall der Druckversorgungseinrichtung DV2 verhindert wird und mittels der Druckversorgungseinrichtung DV2 im Bremskreis BK2 eine Druckregelung bzw. -steuerung weiterhin möglich ist. Ein Ausfall des Bremskreises BK2, z.B. durch Undichtigkeit einer Dichtung in einem Radbremszylinder RZ3 oder RZ4, kann durch Diagnose mittels eines der Schaltventile SV in Bremskreis BK2 erkannt werden, wobei dann ebenfalls die Bypassventile BP1 und BP2 geschlossen werden, womit ein Ausfall der Druckversorgungseinrichtung DV1 verhindert wird und mittels der Druckversorgungseinrichtung DV1 im Bremskreis BK1 eine Druckregelung bzw. -steuerung weiterhin möglich ist. Hierbei sind Undichtigkeiten aller Ventile z.B. SV, BP1, BP2 sicherheitskritisch als schlafende Fehler zu betrachten. So enthält das die Ventile durchströmende Hydraulikmedium Schmutzpartikel, welche ein Schließen des jeweiligen Ventils verhindern können und die Ventile somit undicht werden. Im vorliegenden Fall kann z.B. bei Ausfall einer Dichtung eines Radbremszylinders RZ1 oder RZ2 und durch den schlafenden Fehler des zugehörigen Schaltventils SV zwar der der Bremskreis BK1 ausfallen, der Bremskreis BK2 ist jedoch durch die Zwischenschaltung der beiden Bypassventile BP1 und BP2 abgesichert. In ähnlicher Weise kann z.B. bei Ausfall einer Dichtung eines Radbremszylinders RZ3 oder RZ4 und durch den schlafenden Fehler des zugehörigen Schaltventils SV zwar der Bremskreis BK2 ausfallen, der Bremskreis BK1 ist jedoch ebenfalls durch die Zwischenschaltung der beiden Bypassventile BP1 und BP2 abgesichert. Es müsste hier ein Dreifachfehler vorliegen, d.h. beide Bypassventile BP1 und BP2 müssten zusätzlich ausfallen, damit ein Totalausfall beider Bremskreise BK1 und BK2 vorliegt. Jeder der beiden Bremskreise BK1 und BK2 ist somit sicher gegen Doppelfehler geschützt und verhindert einen Totalausfall der Bremse. Sicherheit gegen Doppelfehler, wenn schlafende Fehler auftreten können, ist ein entscheidendes Sicherheitsmerkmal für HAD und FAD. Auch die Aufrechterhaltung der Druckversorgung oder des Bremskraftverstärkers bei Bremskreisausfall zählt dazu.

Die Druckversorgungseinrichtung DV2 kann dabei, bei schnellem Druckaufbau, oder Druckaufbau über z.B. 120 bar, die andere Druckversorgungseinrichtung DV1 unterstützen und/oder die ABS-Funktion vornehmen und/oder bei Ausfall der anderen Druckversorgungseinrichtung DV1 dessen Funktion mit übernehmen. Ein Druckabbau kann dabei mittels einer Rotationspumpe Pa, PBb oder sofern vorhanden auch alternativ oder gleichzeitig mittels mindestens eines Auslassventils ZAV, AV1, AV2 erfolgen.

Ebenso ist es möglich, dass die Druckversorgungseinrichtung DV1 den Druckaufbau für Druckbereiche kleiner gleich 120 bar und für die ABS-Funktion übernimmt. Der Druckabbau in einem Bremskreis erfolgt dabei durch Umkehr der Drehrichtung der Rotationspumpe Pa. Bei Ausfall der Druckversorgungseinrichtung DV2 steht, sofern die Druckversorgungseinrichtung DV1 nur auf einen maximalen Druck von z.B. 120 bar ausgelegt ist, nur dieser maximale Druck von z.B. 120 bar für beide Bremskreise BK1 und BK2 zur Verfügung.

Bei geschlossenen Bypassventile BP1 und/oder BP2 können die beiden Druckversorgungseinrichtungen DV1 und DV2 in ihren Bremskreisen BK1 und BK2 den Druck unabhängig voneinander einregeln bzw. -stellen. Auch hier kann der Druckabbau über die Rotationspumpen Pa erfolgen. Sofern jedoch zusätzliche Auslassventile ZAV, AV1, AV2 vorhanden sind, kann auch über diese der Druck in einer oder mehreren Radbremsen abgebaut werden. So kann auch ein gleichzeitiger Druckabbau mittels einer Rotationspumpe, z.B. Pa, z.B. in der Radbremse RZ1 durch Umkehr der Drehrichtung der Rotationspumpe Pa erfolgen, wobei gleichzeitig z.B. in der Radbremse RZ3 über die Rotationspumpe Pb oder über ein Auslassventil AV2, ZAV der Druck abgebaut wird.

Die Pedalbewegung wird über redundante Pedalwegsensoren PS gemessen, die zugleich auf ein KWS-Messelement (Kraft-Weg-Sensor) nach WO 2012/059175 A1 wirken. Mit den Signalen der Pedalwegsensoren wird die Druckversorgungseinrichtung DV1 angesteuert, wobei die Rotationspumpe Pa den Volumenfluss in der Hydraulikleitung 1 in dem Bremskreis BK1 und über die redundanten Bypassventile BP1 und BP2 in den Bremskreis BK2 bewirkt. Die Druckversorgungseinrichtung DV1 kann so ausgelegt werden, dass sie nur bis zum Blockierdruck z. B. 120 bar wirkt. Für höhere Drücke liefert dann die Druckversorgungseinrichtung DV2 Volumen in den Bremskreis BK2 und über die redundanten Bypassventile BP1 und BP2, und bei geschlossenem Schaltventil PD1, in Bremskreis BK1. Dabei kann die Druckversorgungseinrichtung DV2 eine kontinuierlich fördernde Pumpe sein. Ist das Bremssystem schlecht entlüftet oder entsteht Dampfblasenentwicklung mit mehr Volumenbedarf, so wird dies über die bekannte Druckvolumenkennlinie (PV-Kennlinie) der Bremse erfasst, was zur Folge hat, dass die Druckversorgungseinrichtung DV1 mehr Volumen liefern muss, um einen bestimmten Druck in den Radbremszylindern RZ1, RZ2, RZ3 und RZ4 zu erreichen. Bei einer Pedalbetätigung wird der Kolben Ko bewegt, welcher über den pedalkraftproportionalen Druck auf den bekannten Wegsimulator WS wirkt und damit die Pedalcharakteristik bestimmt. Der Wegsimulator WS kann üblicherweise über ein Ventil abgeschaltet werden, insbesondere in der Rückfallebene bei ausgefallenen Druckversorgungseinrichtungen DV1 und DV2. Bei redundanter Druckversorgungseinrichtungen ist dies aufgrund der sehr geringen Ausfallwahrscheinlichkeit im Prinzip nicht mehr relevant.

Über die Leitung 3 kann der Hauptbremszylinder SHZ mit den Bremskreisen BK1 oder BK2 verbunden sein, wobei in der Hydraulikleitung 3 das Schaltventil FV zum Verschließen derselben angeordnet ist. Diese Verbindung ist nur in der Rückfallebene, d.h. wenn beide Druckversorgungseinrichtungen DV1 und DV2 ausgefallen sind, wirksam. Sofern die Hydraulikleitung 3 mit der Verbindungsleitung VLa der beiden Bypassventile BP1 und BP2 verbunden ist, bilden die beiden Bypassventile BP1 und BP2 eine weitere Redundanz. Eine übliche Verbindung vom Schaltventil FV direkt in einen der beiden Bremskreise BK1, BK2 hätte bei undichtem Schaltventil FV zur Folge, dass der Bremskreis und damit die Druckversorgung auf den SHZ-Kolben Ko wirkt, was unmittelbar das Abschalten der Druckversorgung zur Folge haben muss.

Ein Ausfall des Bremskreises BK2 kann, z.B. bei Verwendung einer 1-kreisigen Zahnradpumpe als Rotationspumpe Pb, durch eine Undichtigkeit des Rückschlagventils RV1 entstehen. Der Ausfall der Druckversorgungseinrichtung DV2 kann hier durch ein redundantes Rückschlagventil RV2 verhindert werden. Eine hydraulische Verbindung zwischen den beiden Rückschlagventilen RV1 und RV2 zum Vorratsbehältnis VB mit der Drossel Dr mit kleinem Durchfluss ermöglicht die Diagnose, z. B. über messbaren Druckabfall.

Für die ABS-Regelung oder zur Druckreduzierung mit der zweiten Druckversorgungseinrichtung DV2 ist ein zentrales Auslassventil ZAV notwendig. Der Volumenfluss geht dabei zusätzlich über die Bypassventile BP1 oder BP2, so dass ein undichtes ZAV für den Normalbetrieb nicht kritisch ist, da bei Undichtigkeit des zentralen Auslassventils ZAV die Drucksteuerung in BK1 über die Druckversorgungseinrichtung DV1 und die Drucksteuerung in BK2 über die Druckversorgungseinrichtung DV2 für den Druckaufbau erfolgt. Der Druckabbau im Bremskreis BK2 kann weiterhin auch bei undichtem Auslassventil ZAV über das Bypassventil BP2 erfolgen. Außerdem wird der Fehler, auch schlafend, von ZAV gleich durch Druckänderung oder erhöhte Volumenförderung der Druckversorgungseinrichtung DV1 erkannt.

Bei normaler Bremsung bis ca. 120 bar wirkt die Druckversorgungseinrichtung DV1 über geöffnete Bypassventile BP1 und BP2 in beide Bremskreise BK1 und BK2. Für extreme Sicherheitsanforderungen kann auch ein redundantes Auslassventil ZAVr in der Hydraulikleitung 6 vom zentralen Auslassventil ZAV zum Vorratsbehältnis VB eingebaut werden.

Die ABS-Funktion über Multiplexbetrieb MUX und der Druckversorgungseinrichtung DV1 erfolgt wie in WO 2006/111393 A1 beschrieben. Allerdings wird bei der Rotationspumpe, insbesondere in Form einer Zahnradpumpe, zum Druckabbau die Rotationsrichtung umgekehrt. Erweiterte Multiplexfunktionen ergeben sich durch ein zentrales Auslassventil ZAV. Ist beim Druckaufbau Pauf im Bremskreis BK1 gleichzeitig ein Druckabbau Pab im anderen Bremskreis BK2 notwendig, so erfolgt dieser Druckabbau über das zentrale Auslassventil ZAV bei gleichzeitig geschlossenem Bypassventil BP1. Dadurch ist der Multiplexbetrieb MUX nur durch zwei Radbremszylinder RZ1 und RZ2 im Bremskreis BK1 belastet. So kann z.B. nicht zugleich ein Druckaufbau Pauf in Radbremszylinder RZ1 und ein Druckabbau Pab in Radbremszylinder RZ2 des Bremskreises BK1 erfolgen. Alternativ kann auch ein Auslassventil AV1 bzw. AV2 im jeweiligen Bremskreis BK1 bzw. BK2 zum Druckabbau Pab zur Entlastung des Multiplexbetriebs MUX verwendet werden. Dabei kann einerseits das Auslassventil AV1 bzw. AV2 entweder zwischen einem Schaltventil SV und einem Bypassventil BP1 bzw. BP2 oder aber zwischen dem Radbremszylinder und dem zugehörigen Schaltventil SV angeordnet bzw. angeschlossen werden, und andererseits zum Vorratsbehältnis VB angeschlossen werden, so dass ein direkter Druckabbau Pab über das Auslassventil hin zu dem Vorratsbehältnis VB erfolgen kann. Dies ist insbesondere zum Druckabbau Pab in den Radbremszylindern der Vorderräder sinnvoll. Das zentrale Auslassventil ZAV wird bei dieser Alternative nicht benötigt.

Die ABS-Funktion mittels der zweiten Druckversorgungseinrichtung DV2 erfolgt in diesem Fall leicht eingeschränkt, insbesondere ist kein Druckaufbau Pauf in einem Radbremszylinder während eines Druckabbaus Pab in einem anderen Radbremszylinder möglich bzw. vorgesehen. Eine voll individuelle ABS-Regelung ist trotzdem möglich. Zu berücksichtigen ist der seltene Einsatz der Druckversorgungseinrichtung DV2 bei Drücken größer 120 bar und bei Ausfall der ersten Druckversorgungseinrichtung DV1.

Typisch für den o.g. Multiplexbetrieb MUX bei z.B. ABS-Betrieb ist, dass die Druckregelung mit der Druckversorgungseinrichtung DV1 über die Volumenzumessung, welche mittels der Rotordrehung bzw. des Rotorverdrehwinkels der Rotationspumpe, welche mittels dem Rotorwinkelgeber WGa gemessen wird, berechnet wird. Hierbei kann auch die Druck-Volumen-Kennlinie der Bremse (PV-Kennlinie) berücksichtigt werden.

Bei Verwendung einer einfachen Exzenterkolbenpumpe als Rotationspumpe Pb bei der Druckversorgungseinrichtung DV2 kann dies nicht über die Kolbenbewegung, jedoch über die Förderzeit, welche proportional zum geförderten Volumen bei zusätzlicher Drehzahlmessung und ggfs. Druckmessung ist, erfolgen. Somit ist auch eine Volumenzumessung für den Druckaufbau mittels der Druckversorgungseinrichtung DV2 möglich. Vorteilhaft ist hier ein serieller und nicht gleichzeitiger Druckaufbau Pauf in den einzelnen Radbremszylindern.

Zu berücksichtigen ist dabei die Ventildimensionierung der Staudruck am Ventil, insbesondere bei den Bypassventilen BP1 und BP2 bei schnellem Druckaufbau Pauf in den Bremskreisen. Der Staudruck an den Bypassventilen BP1 und BP2 wirkt als Druckdifferenz zwischen den Bremskreisen BK1 und BK2. Dieser kann erheblich reduziert werden, wenn in diesem Betriebszustand beide Druckversorgungseinrichtungen DV1 und DV2 eingeschaltet werden. Hier bietet sich auch eine 1-kreisige Zahnradpumpe bei der Druckversorgungseinrichtung DV2 anstelle einer Kolbenpumpe an. Hierbei kann der Druckabbau Pab und Druckaufbau Pauf auch über die Zahnradpumpe erfolgen. Hierzu ist anstelle der Rückschlagventile RV1 und RV2 ein nicht gezeichnetes Schaltventil in der Rückleitung zum Vorratsbehältnis VB notwendig. Damit ist auch mit der zweiten Druckversorgungseinrichtung DV2 ein voller Multiplexbetrieb MUX möglich.

Die Steuer- und Regeleinrichtung ECU in Gehäuse B ist Bestandteil des gesamten Systems und des Packagings. Für eine fehlersichere Funktion ist eine redundante oder teilredundante ECU notwendig. Diese teilredundante ECU kann auch für bestimmte Funktionen zusätzlich zur redundanten ECU verwendet werden. In jedem Fall sind bzw. sollten die Ventile redundant über getrennte Ventiltreiber und Trennschalter angetrieben werden, der einen ausgefallenen Ventiltreiber abschaltet.

Zur Redundanz der Steuer- und Regeleinrichtung ECU in Gehäuse B ist auch ein redundanter Bordnetzanschluss BN1 bzw. BN2, oder ein Hilfsbordnetzanschluss mit z.B. U-Caps BN2', falls der redundante Bordnetzanschluss BN2 nicht zur Verfügung steht, notwendig. Auch kann ein Anschluss mit 48V für den Anschluss der Motoren verwendet werden. Vorteil bei 48V ist eine höhere Dynamik. Bei Ausfall des Motors von der Druckversorgungseinrichtung DV1 bei 48V ist Notbetrieb mit 12V mit ca. 50% Leistung mit reduzierter Dynamik gegeben, wodurch sich vorteilhaft eine Kostenersparnis ergibt. Hierzu ist eine Auslegung des Motors auf z.B. 24V notwendig.

Vorzugsweise wird im Bremskreis BK2 ein Druckgeber DG, ggf. auch in BK1 (wie gestrichelt eingezeichnet) eingesetzt. Bei Ausfall des Druckgebers kann eine Druckregelung über die Strommessung der Motoren und Winkelsteuerung der Rotoren, insbesondere in Form von Zahnrädern, über die Druck-Volumen-Kennlinie (PV-Kennlinie) erfolgen.

In der Hydraulikleitung 2 der Druckversorgungseinrichtung DV2 kann zudem ein Überdruckventil ÜV zum Schutz des Antriebes angeordnet sein, welches z.B. bei ca. 120 bar öffnet.

Die **Figur 5a** zeigt eine mögliche Ausführungsform des erfindungsgemäßen Packaging bzw. Aufbaus für die erfindungsgemäße Druckversorgungseinheit. Dabei sind folgende Hauptfunktionsblöcke zu berücksichtigen:
A Hydraulikgehäuse HCU
B elektrisches Steuergerät ECU
C Hauptzylinder HZ, optional mit Wegsimulator WS, Vorratsbehältnis VB und/oder Pedalsensor PS

Diese Hauptfunktionsblöcke sind in DE 10 2015 104 246 A1 und DE 10 2016 105 232 A1 eingehend beschrieben, wobei diese Dokumente zur Erläuterung von hier nicht beschriebenen Details dienen können.

Das Hydraulikgehäuse A ist eine wesentliche Komponente der erfindungsgemäßen Druckversorgungseinheit, in dem mindestens eine - vorzugsweise alle - Rotationspumpe(n) Pa, Pb, Pb1 mindestens einer Druckversorgungseinrichtung DV1, DV2 angeordnet ist bzw. sind. Sofern Motorgehäuse für die Rotationspumpen Pa, Pb vorgesehen sind, so können diese Motorgehäuse Ma, Mb der Rotationspumpen Pa, Pb entweder in oder an dem Gehäuse A angeordnet sein.

Im Gehäuse A können auch die mechanischen und/oder elektrischen Verbindungen zum Gehäuse B der elektrischen Steuereinheit ECU platziert werden. Weiterhin können in dem Gehäuse A Magnetventile, Rückschlagventile und/oder Druckgeber angeordnet sein, insbesondere mit Verbindung zum Hauptbremszylinder HZ, den Radbremszylindern RZ1-RZ4 sowie den Druckversorgungseinrichtungen DV1, DV2. Sowohl die Magnetventile als auch die Druckgeber benötigen eine Verbindung zur ECU. Auch kann der Single- bzw. Tandem-Hauptbremszylinder HZ, THZ mit in dem Gehäuse A angeordnet sein.

Das Gehäuse bzw. der Block B ist dicht, insbesondere großflächig anliegend, an dem Gehäuse A angeordnet bzw. mit diesem verbunden und beinhaltet die Bauelemente und (Steck-)Kontakte der Steuerelektronik, welche auf einer Leiterplatte PCB angeordnet sind. Ebenso sind die Stecker zum Bordnetz in oder an dem Gehäuse B angeordnet bzw. befestigt.

Die Steuereinheit ECU kann voll redundant oder auch nur in Teilen redundant (nachfolgend teilredundant genannt) ausgeführt sein. So kann z.B. ein doppelter Bordnetzanschluss oder auch eine zweite redundante Leiterplatter vorgesehen werden.

Am Gehäuse A sind die hydraulischen Verbindungsleitungen zu den Bremskreisen und Radbremszylindern RZ1-RZ4 angeschlossen. Die hydraulischen Anschlüsse für die Verbindungsleitungen können seitlich oder auch stirnseitig an dem Gehäuse A angeordnet sein. Es ist auch möglich, dass die hydraulischen Anschlüsse in einem Winkel, z.B. 45° gegenüber der Horizontalen, am Gehäuse A angeordnet sind, so dass sich ein günstiger Anschlusswinkel ergibt und/oder die Druckversorgungseinheit möglichst klein und kompakt baut.

Sofern der Single- bzw. Tandem-Hauptbremszylinder HZ, THZ nicht mit im Gehäuse A angeordnet ist, so ist hierfür ein weiteres Gehäuse C vorzusehen. In diesem Gehäuse C kann zusätzlich noch ein evtl. vorhandener Wegsimulator WS und/oder Pedalsensor PS enthalten sein. Ein elektrisches und/oder mechanisches Interface besteht dabei zu dem Gehäuse B bzw. der elektronischen Steuereinheit ECU.

Vorzugsweise sind die Gehäuse A und C in Richtung der Achse A_{HZ} hintereinander angeordnet, wobei das Gehäuse B in Achsrichtung A_{HZ} neben dem Gehäuse A angeordnet ist. Die Achsen Aa, Ab der Motoren Ma, Mb sind vorzugsweise senkrecht zu A_{HZ} ausgerichtet.

Der Einfülldeckel des Vorratsbehälters VB kann vor den Gehäusen A, B und C oder auch seitlich und/oder oberhalb deren Mitte angeordnet sein.

Die **Figur 5a** zeigt die Ansicht von vorn bzw. in Richtung der Achse A_{HZ}. Im Gehäuse A sind die Rotationspumpen Pa, Pb angeordnet. Die elektrischen Motoren Ma, Mb für die Rotationspumpen Pa, Pb können mit ihren Gehäusen an dem Gehäuse A angrenzen bzw. an diesem befestigt sein. Es ist jedoch ebenso möglich, dass die Motoren Ma, Mb mit im Gehäuse A angeordnet sind. Die Motorachsen Aa und Ab sind vorzugsweise parallel zueinander ausgerichtet. Wie in Figur 5a gezeigt, sind die Motorenachsen Aa, Ab senkrecht zur Achse A_{HZ} des Hauptbremszylinders angeordnet.

Die Magnetventile MV, und die elektrischen und mechanischen Verbindungen 3a, 3b und 5c hin zur ECU bzw. zum Gehäuse B sind ebenfalls im Gehäuse A angeordnet.

**Figur 5a** zeigt ebenso den alternativen stirnseitigen Anschluss der hydraulischen Anschlüsse für die Radbremszylinder RZ1-RZ4. Auch ist die Lage des Einlassstutzens für den Vorratsbehälter VB vorn oder in der Mitte ist dargestellt. Insgesamt stellt die dargestellte Anordnung der einzelnen Komponenten eine kompakte Baueinheit mit sehr kleinen Abmessungen dar.

Der Block C bzw. das Gehäuse C kann getrennt von den Gehäusen A und B z.B. direkt an der Spritzwand des Fahrzeugs mit Verbindung zum Pedalinterface angeordnet werden. Die Blöcke A und B können an passender Stelle im Aggregateraum oder Motorraum angeordnet werden, wobei dann die Achsen Aa, Ab der Motoren Ma, Mb nicht mehr rechtwinklig zur Achse des Hauptbremszylinders HZ, THZ angeordnet werden muss.

Die Figur 3b zeigt eine perspektivische Ansicht der Druckversorgungseinheit gemäß Figuren 3 und 3a. Das Gehäuse A ist neben dem Gehäuse B angeordnet, wobei das Gehäuse C an den Stirnseiten A1, B1 der Gehäuse A und B anliegt. Der Einfüllstutzen VB_{E} für den Vorratsbehälter VB ist an der Vorderseite und oberhalb der Gehäuse A, B, C angeordnet.

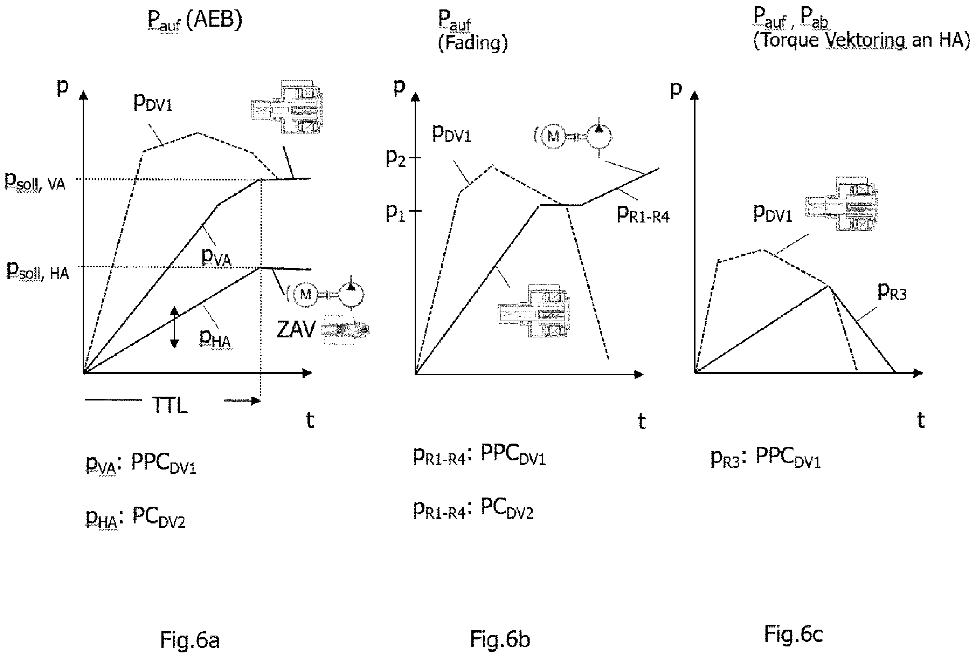

**Fig.6a** zeigt einen schnellen Druckaufbau durch beide Druckversorgungen DV1 und DV2 an zwei Achsen. Der Druckaufbau an der Vorderachse p_{VA} erfolgt durch die DV1 mit entsprechender variabler Vordruckregelung p_{DV1} bis zum Solldruck Pₛₒₗₗ, _{VA}. Der Vordruck bestimmt die Druckdifferenz und somit den Druckgradienten, die Magnetventile zwischen Druckversorgung und Radbremse sind hierbei vollständig geöffnet . Gleichzeitig erfolgt der Druckaufbau an der Hinterachse p_{HA} über die zweite Druckversorgung DV2 mit entsprechender Vordruckregelung (nicht eingezeichnet) bis zum 2. Solldruck pₛₒₗₗ, _{HA}. Der Druckaufbau der DV2 erfolgt hier klassisch wie bei Standardbremsregelsysteme (ABS, ESP) mit Kolbenpumpen, wobei mindestens ein Magnetventil (z.B. ZAV-Ventil) zur Druckregelung verwendet wird. Zur Steuerung der Druckveränderung wird das Magnetventil optional, getaktet, oder pulsweitenmoduliert gesteuert.

Durch den simultanen Druckaufbau kann entweder die Zeit zum Blockierdruck (TTL) im Vergleich zu Systemen mit nur einer Druckversorgung signifikant reduziert werden, bzw. die Druckversorgungen können in der Leistung downgesized werden, womit sich die Differenzkosten von zwei Druckversorgungen zu nur einer Druckversorgung stark reduzieren lassen.

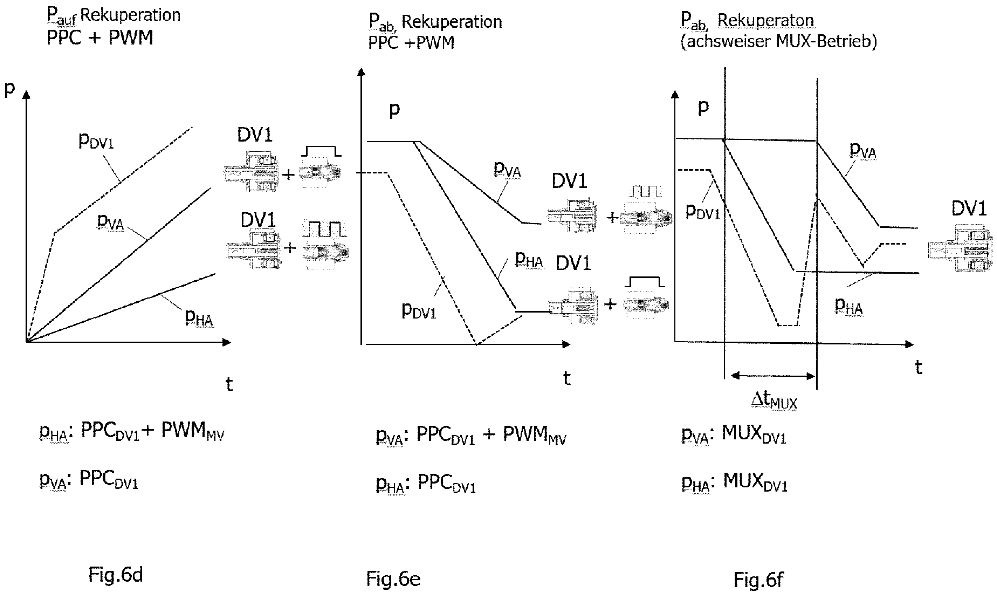

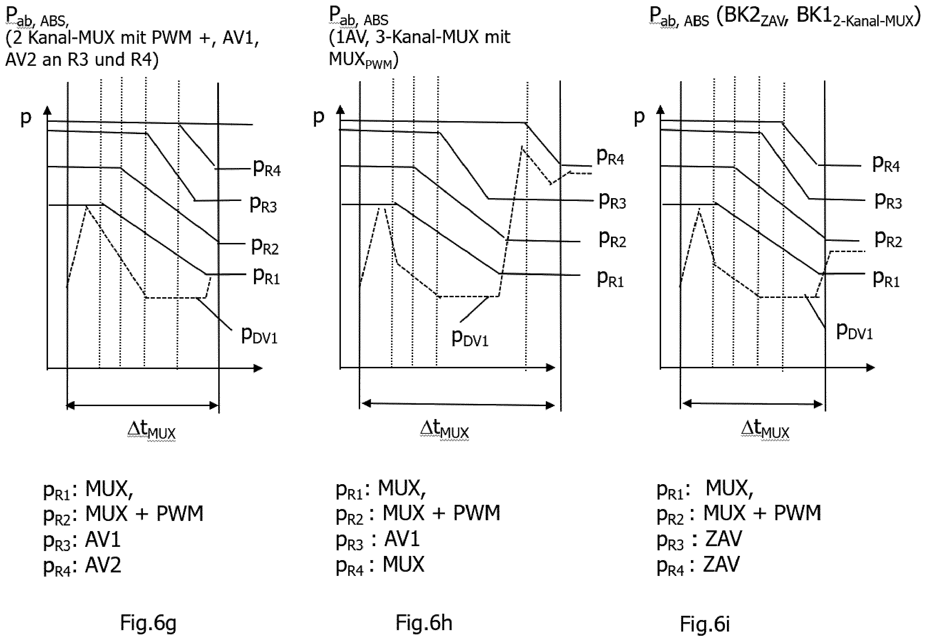

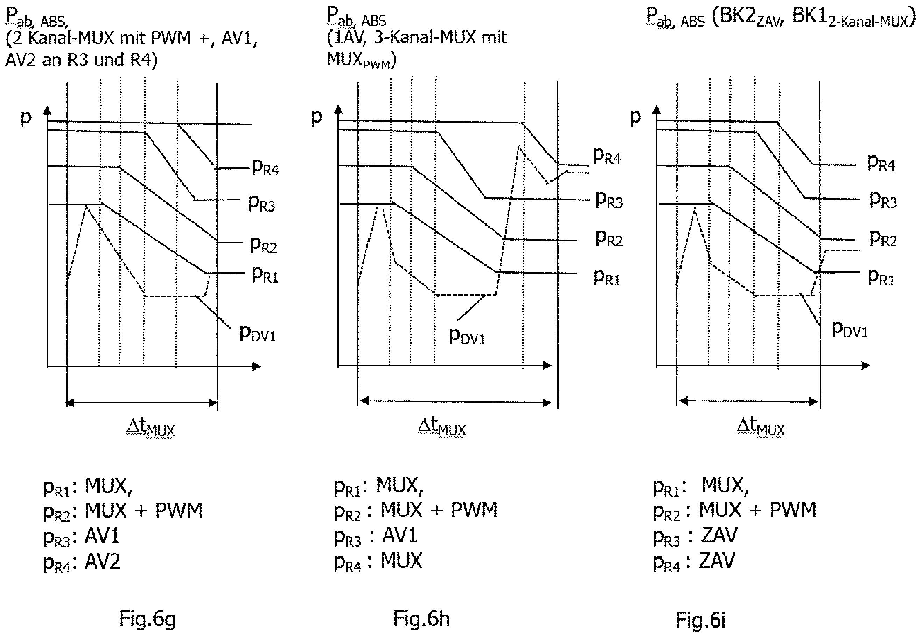

**Fig.6 b** zeigt den Ablauf des Druckaufbaues aller Räder p_{R1-R4} bis zum ersten Druck p1 und im weiteren Verlauf bis zum Maximaldruck p2, z.B. bei Fading, d.h. starker Temperaturerhöhung an den Radbremsen. Hier wird in einem ersten Schritt der Druck bis zu einem ersten Druckniveau p1 über die Druckversorgung DV1 erzeugt, der höhere Druck p₂ wird dann über die Druckversorgung DV2 erzeugt. In dieser Phase der weiteren Druckerhöhung von p1 bis zu p2 ist die Druckversorgung DV1 über das PD1-Ventil vom Bremskreis BK1 getrennt und der Druck in der Druckversorgung DV1 wird durch Rückfahren des Kolbens abgebaut. Der nicht dargestellte nachfolgende Druckabbau erfolgt dann über Auslassventile im oberen Druckbereich oder über die PPC-Steuerung der Druckversorgung DV1 im unteren Druckbereich.

**Fig.6c** zeigt den beispielhaften Druckaufbau bei Lenkungseingriffen bzw. Torque Vektoring an einer der Hinterachse HA an der Radbremsen R3. Ein derartiger Eingriff wird z.B. dann eingesetzt, wenn bei einer Kurvenfahrt an der Vorderachse ein Lenkeingriff durch die elektrische Servolenkung erfolgt und dieser Lenkungseingriff durch Erzeugung eines kontrollierten Bremsmomentes und eines Giermomentes an einem Hinterrad p_{R3} unterstützt wird. Durch diesen Eingriff kann die Wirkung eines Hinterachslenkungsaggregates (z.B. elektrische Hinterachslenkung) substituiert werden, weil die Drucksteuerung durch variable Drucksteuerung der DV1 (PPC-Regelung) sehr präzise erfolgt. Magnetventile zwischen Druckversorgung DV1 und Radbremse R3 werden hier zur Reduzierung des Strömungswiderstandes offen betrieben, der Bremsmomenteingriff wird ausschließlich über die DV1 gesteuert.

**Fig.6d** zeigt den Druckaufbau bei Bremsbetrieb mit unterschiedlicher Rekuperationsleistung an zwei Achsen, wobei ein bzw. mehrere Elektromotor(en) zur Rekuperation vom Bremsenergie an der Hinterachse und/oder Vorderachse vorgesehen ist. Durch das Bremsmoment über den Elektromotor ist an der Hinterachse ein niedriger Druck erforderlich, welcher durch unterschiedliche Achslastverteilung und max. Drehmomentleistung des Elektromotors bei Verzögerung zusätzlich variieren kann. Wie im Verfahren in Fig. 6c beschrieben, erfolgt die Steuerung des unterschiedlichen Druckverlaufes über PPC-Drucksteuerung, d.h. variable Vordrucksteuerung über eine Druckversorgung (DV1), wobei an einer Achse die Magnetventile der Radbremsen offen sind und an der Hinterachse die Magnetventile der Radbremsen PWM gesteuert betrieben werden.

**Fig.6e** zeigt den Druckabbau im Rekuperationsbetrieb an zwei Achsen. Vergleichbar wie in Fig. 6c und 6d erfolgt die Vordrucksteuerung über die Druckversorgung DV1. Unterschiedliche Druckverläufe werden realisiert, indem Magnetventile an einer Achse (VA) PWM gesteuert werden. Dies können Schaltventile an den Rädern sein oder Verbindungsventile BP1/BP2 des Bremskreises BK2 mit der Druckversorgung. In diesem Fall sind RB3 und RB4 in Gegensatz zur Darstellung in Fig.1 Radbremsen der Vorderachse. Wird die Hydraulikschaltung von Fig.1 verwendet, (Radbremse RB3 und RB4 an -HA, Radbremse RB1, RB2) an Hinterachse, ist ein zusätzliches Trennventil, wie in Fig. 1 dargestellt, damit der Raddruck der Vorderachse gleichzeitig zum Raddruck der Hinterachse abgebaut werden kann und der Druck an der Vorderachse höher ist als der Druck an der Hinterachse. Hierzu wird das TV-Ventil PWM gesteuert.

**Fig.6f** zeigt eine Alternative zur in Fig. 6d und Fig.6e erläuterten Druckabbauverfahren. Hier erfolgt die Druckregelung über den sequentiellen MUX-Betrieb. Hier wird der Vordruck der Druckversorgung DV1 derart gesteuert, dass zuerst der Druck an der Hinterachse abgebaut wird und nachfolgend an der Vorderachse. Der Druck wird daher nach Abschluss des Druckabbaus an der Hinterachse wieder erhöht, damit der Differenzdruck beim Öffnen nicht zu hoch ist. Dann wird der Druck an der Hinterachse wieder abgebaut. Hier ergibt sich ein Zeitverzug □t_{MUX} , der in der Realität jedoch sehr kurz ist und für den Fahrer kaum auflösbar ist. Der Vorteil in diesem Verfahren ist, dass nicht Ventile erforderlich sind, die PWM-gesteuert werden müssen und eine einheitliche Konfiguration der Hydraulik ist möglich. So können beispielweise auch Fahrzeuge mit diagonalen Bremskreisen beim Druckaufbau und Druckabbau bedient werden.

**Fig.6 g** zeigt eine erste Variante der Druckabbauregelung im ABS-Regelbetrieb mit 2-Kanal-MUX-Betrieb mit 2 Auslassventilen AV1 und AV2 an 2 Radbremsen. AV1 und AV2 sind dabei vorzugsweise an Radbremsen der Vorderachse, wo sich aufgrund der höheren Dynamikanforderung primär einen weiteren Freiheitsgrad im Druckabbau vorteilhaft auswirkt. In einem MUX-Regelzyklus werden durch Vordrucksteuerung der DV1 die Drücke in den Radbremsen p_{R1} und p_{R2} abgebaut, wobei das Schaltventil an der Radbremse R2 PWM-getaktet ist. Diese ermöglicht einen simultanen Druckabbau mit Druckgradientensteuerung. Gleichzeitig kann der Druck an den Radbremsen R3 und R4 über Auslassventile abgebaut werden. In diesem Fall ist AV1 anstatt an der Radbremse R1 (Fig. 1) an der Radbremse R4 angebracht.

**Fig.6 h** zeigt eine zweite Variante der Druckabbauregelung im ABS-Regelbetrieb mit 3-Kanal-MUX-Betireb mit einem Auslassventil AV1 an einer Radbremse. Hier wird der Druck analog zur Fig. 6g in den Radbremsen R1, R2 und R3 abgebaut, während Radbremse R4 erst später bedient wird über MUX-Regelung. Dadurch ergibt sich eine geringe Verzögerung der MUX-Zykluszeit □t_{MUX}.

**Fig.6 i** zeigt eine dritte Variante der Druckabbauregelung im ABS-Regelbetrieb mit 2-Kanal MUX-Betrieb im Bremskreis BK1 sowie einem Druckabbaubetrieb mit zentralen Auslassventile ZAV, z.B. im Bremskreis BK2. Hier wird während des MUX-Druckabbaus in den Radbremsen R1 und R2 der Druck in den Radbremsen R3 und R4 über das zentrale ZAV-Ventil abgebaut. Der Zeitpunkt des Druckabbaus in den Radbremsen R3 und R4 ist zeitlich flexibel, der Druckgradient kann über PWM-Betrieb gesteuert werden.

### Bezugszeichenliste

- 1 - 11: Hydraulikleitungen
- BK1: Bremskreis 1
- BK2: Bremskreis 2
- HZ: Hauptzylinder
- BP1: Bypassventil 1 (SO) bzw. Verbindungsschaltventil
- BP2: Bypassventil 2 (SO) bzw. Verbindungsschaltventil
- VB: Vorratsbehälter
- WS: Wegsimulator
- WA: Wegsimulatorabschaltventil
- ECU: elektrische Steuereinheit
- DV: Druckversorgung
- DG: Druckgeber
- D1 - D7: Dichtungen
- AV1, AV2: Auslassventile (SG)
- ZAV: zentrales Auslassventil (SG)
- SV: Schaltventil (SO)
- RZ: Radzylinder
- RB1-RB4: Radbremsen
- NV: Niveaugeber
- PD1: Schaltventil (SG)
- SO: stromlos offen
- SG: stromlos geschlossen
- SV: Saugventil
- RV: Rückschlagventil
- KWS: Kraft-Weg-Messelement
- Sp: Spindel mit KGT
- Ko: Kolben
- Dr: Drossel
- D: Dampferelement
- PS: Pedalwegsensoren
- P: Pedalbetätigung
- NS: Niveausensor
- TV: Trennventil
- V1 - V4: Ventile des DHK
- VL: Hydraulische Verbindungsleitung zur Verbindung der beiden Bremskreise BK1 und BK2
- VLa: innere Verbindungsleitung zur Verbindung der beiden Verbindungsschaltventile BP1 und BP2
- ÜV1, ÜV2: Überdruckventil

## Patentansprüche

1. Vorrichtung zur Bremskrafterzeugung in einem Fahrzeug umfassend ein Bremssystem umfassend mindestens zwei elektromotorisch angetriebene Druckversorgungseinrichtungen (DV1, DV2), wobei
- das Bremssystem einen ersten und einen zweiten hydraulische Bremskreis(BK1, BK2) mit jeweils mindestens einer oder zwei hydraulisch wirkenden Radbremsen (RB1, RB2, RB3, RB4) aufweist,
- mit einer der Druckversorgungseinrichtungen (DV1, DV2) Druck in mindestens einem Bremskreis (BK1, BK2) sowohl aufbaubar als auch abbaubar ist,
- eine Druckversorgungseinrichtung (DV2) eine von einem elektromotorischen Antrieb angetriebene Pumpe, insbesondere einer Kolbenpumpe oder Zahnradpumpe, mit kontinuierlicher Volumenförderung ist,
- mindestens eine Ventilanordnung mit Ventilen zum radindividuellen Einstellen von Bremsdrücken und/oder zum Trennen bzw. Verbinden der Radbremsen (RB1, RB2, RB3, RB4) von einem Bremskreis und/oder eine Druckversorgungseinrichtung (DV1, DV2) vorgesehen ist,
- zur Steuerung des Bremssystems oder Teilen davon mindestens eine elektronische Steuer- und Regeleinheit (ECU) vorgesehen ist und
- jeder Bremskreis (BK1, BK2) eine Hydraulikhauptleitung (4, 5) aufweist, über die die Radbremsen (RB1, RB2, RB3, RB4) mit jeder der beiden Druckversorgungseinrichtung (DV1, DV2) verbunden bzw. verbindbar sind,
**dadurch gekennzeichnet, dass** das Bremssystem:
- ein elektrisches Bremspedal (P) als Betätigungseinheit mit einer Sensor ECU und Steuerung über eine zentrale Steuereinheit (M-ECU), wobei über mindestens zwei redundante Signalleitungen (SL1, SL2) ein Fahrerwunsch von der Sensor ECU via die zentrale Steuereinheit (M-ECU) an mindestens eine Druckversorgungseinrichtung (DV1, DV2) übertragen wird; oder
- einen von einer Betätigungseinheit (P), insbesondere in Form eines Bremspedals, betätigbaren Hauptbremszylinder (HZ) mit nur einem Kolben, dessen einer Druckraum (A1) mit einem Wegsimulator (WS) verbunden ist und mit mindestens einem hydraulischen Bremskreis (BK1, BK2) über eine Hydraulikleitung (3) verbindbar ist, wobei mindestens ein gesteuertes Ventil (FV) der mindestens einen Ventilanordnung zur Absperrung der Hydraulikleitung (3) vorgesehen ist, wobei das Bremssystem als aufgelöstes System ausgebildet ist, wobei die Druckversorgungseinrichtungen (DV1, DV2) und die Betätigungseinheit (P) getrennt angeordnet und über eine hydraulische Leitung verbunden sind;
umfasst.

2. Vorrichtung nach Anspruch 1, **dadurch gekennzeichnet, dass** die Hydraulikleitungen, Magnetventile der mindestens einen Ventilanordnung und Hydraulikelemente zur Druckerzeugung der Druckversorgung (DV1, DV2) in einer Baueinheit bzw. einem Hydraulikgehäuse angeordnet sind, und dass die Betätigungseinheit in einem separaten Gehäuse angeordnet ist.

3. Vorrichtung nach Anspruch 1 oder 2, **dadurch gekennzeichnet, dass** mittels einer Zahnradpumpe einer der mindestens zwei Druckversorgungseinrichtungen (DV1, DV2) in mindestens einer Drehrichtung Druck aufbaubar ist und durch Umkehr der Drehrichtung der Zahnradpumpe, insbesondere deren Antriebes, Druck über die Zahnradpumpe abbaubar ist.

4. Vorrichtung nach einem der vorhergehenden Ansprüche, **dadurch gekennzeichnet, dass** mittels jeder Druckversorgereinrichtung (DV1, DV2) unabhängig von der Funktionsfähigkeit der anderen Druckversorgereinrichtung (DV1, DV2) ein ABS- und/oder ESP-Betrieb mit mindestens achsindividueller oder bremskreisindividueller Regelung, insbesondere radindividueller Regelung, möglich ist.

5. Vorrichtung nach einem der vorhergehenden Ansprüche, **dadurch gekennzeichnet, dass** beide Bremskreise (BK1, BK2) mittels einer Verbindungsleitung (VL) miteinander verbunden sind, wobei die Verbindungsleitung (VL) mit mindestens einem Verbindungsventil (BP1, BP2), insbesondere mit mindestens einem Schaltventil der mindestens einen Ventilanordnung, absperrbar ist.

6. Vorrichtung nach einem der vorherigen Ansprüche, **dadurch gekennzeichnet, dass** die Radbremsen (RB1, RB2, RB3, RB4) jeweils über stromlos offene Schaltventile (SV) der mindestens einen Ventilanordnung mit den Druckversorgungseinrichtungen (DV1, DV2) verbunden sind, wobei die Schaltventile (SV) derart an die Radbremse angeschlossen sind, dass sie sich durch den Druck in den Radbremsen (RB1, RB2, RB3, R4) selbstständig öffnen.

7. Vorrichtung nach einem der vorherigen Ansprüche, **dadurch gekennzeichnet, dass** die Achse des Antriebs der ersten Druckversorgungseinrichtung (DV1) senkrecht oder parallel zur Achse des Antriebs der zweiten Druckversorgungseinrichtung (DV2) angeordnet ist.

8. Verfahren unter Verwendung einer Vorrichtung nach einem der vorhergegangenen Ansprüche, **dadurch gekennzeichnet, dass** der Druckaufbau und Druckabbau entweder mittels einer elektrisch angetriebenen Kolben-Zylinder-Einheit einer (DV1) der mindestens zwei Druckversorgungseinrichtungen (DV1, DV2) im PPC-Verfahren über Stromsteuerung und/oder Kolbenwegsteuerung, insbesondere unter Berücksichtigung der Druck-Volumen-Kennlinie, erfolgt und/oder der Druckaufbau und Druckabbau mittels einer elektrisch angetriebenen Pumpe, insbesondere in Form einer Zahnradpumpe einer (DV2) der mindestens zwei Druckversorgungseinrichtungen (DV1, DV2), über Stromsteuerung und/oder Drehzahlsteuerung des Antriebes der Pumpe, insbesondere mit Nachsteuerung auf Basis der Leckage in der Zahnradpumpe, erfolgt.

9. Verfahren nach Anspruch 8, **dadurch gekennzeichnet, dass** mittels einer Zahnradpumpe einer (DV2) der mindestens zwei Druckversorgungseinrichtungen (DV1, DV2) und/oder einer motorisch angetriebenen Kolben-Zylinder-Einheit der Druckaufbau und/oder Druckabbau in mindestens zwei Radbremsen simultan, zeitlich überlappend oder nacheinander erfolgt, wobei mittels eines geschlossenen Schaltventils (SV) der Druck in der zum Schaltventil (SV) gehörenden Radbremse gehalten wird.

10. Verfahren nach Anspruch 8, wenn abhängig von Anspruch 5 und/oder 6, **dadurch gekennzeichnet, dass** beim Druckaufbau und/oder Druckabbau simultan oder teilsimultan unterschiedliche Druckverläufe für unterschiedliche Radbremsen oder Bremskreise mittels Puls-Weiten-Modulation bzw. PWM-Steuerung von stromlos offenen Magnetventilen (BP1, BP2, SV, ZAV) der mindestens einen Ventilanordnung erzeugt werden.

11. Verfahren nach einem der Ansprüche 8 bis 10, **dadurch gekennzeichnet, dass** mittels einer oder beiden Druckversorgungseinrichtungen (DV1, DV2) Torque-Vektoring durch radindividuelle Druckregelung eines Rades oder mehrerer Räder erfolgt, und dass auch bei Ausfall einer Druckversorgungseinrichtung die Torque-Vektoring-Funktion aufrecht erhalten wird.

12. Verfahren nach Anspruch 11, **dadurch gekennzeichnet, dass** bei Ausfall der elektrischen Servolenkung die Vorrichtung eine Notlenkungsfunktion übernimmt.

13. Verfahren nach einem der Ansprüche 8 bis 12, **dadurch gekennzeichnet, dass** mittels einer oder beiden Druckversorgungseinrichtungen (DV1, DV2) eine achsindividuelle Rekuperationsregelung durch achsindividuelle Druckregelung mehrerer Achsen im Druckaufbau und Druckabbau (Pauf, pab) erfolgt, insbesondere bei Ausfall einer Druckversorgungseinrichtung die achsindividuelle Druckregelung über die Verbindungsleitung (VL) aufrecht erhalten wird.

14. Verfahren nach einem der Ansprüche 8 bis 13, **dadurch gekennzeichnet, dass** ein Bremsdruckeingriff nur an einem Rad über Vordrucksteuerung durch eine Kolben-Zylindereinheit oder eine Zahnradpumpe einer der mindestens zwei Druckversorgungseinrichtungen (DV1, DV2), insbesondere mittels PPC-Verfahren für die Kolben-Zylinder-Einheit und/oder Strom-Drehzahlregelung des Pumpenmotors der Zahnradpumpe, erfolgt.

## Claims

1. A braking force generation device in a vehicle having a braking system, comprising at least two electric motor-driven pressure supply devices (DV1, DV2), wherein
- the brake system comprises a first and a second hydraulic brake circuit (BK1, BK2), each having at least one or two hydraulically acting wheel brakes (RB1, RB2, RB3, RB4),
- pressure in at least one brake circuit (BK1, BK2) is both built up and reduced via one of the pressure supply devices (DV1, DV2),
- a pressure supply device (DV2) is a pump driven by an electric motor drive, in particular a piston pump or gear pump, having continuous volume delivery,
- at least one valve arrangement is provided having valves for wheel-specific adjustment of brake pressures and/or for disconnecting or connecting the wheel brakes (RB1, RB2, RB3, RB4) from a brake circuit and/or a pressure supply device (DV1, DV2),
- at least one electronic control and regulation unit (ECU) is provided for controlling the braking system or parts thereof, and
- each brake circuit (BK1, BK2) comprises a main hydraulic line (4, 5), via which the wheel brakes (RB1, RB2, RB3, RB4) are connected or can be connected to each of the two pressure supply devices (DV1, DV2),
**characterized in that** the braking system comprises:
- an electric brake pedal (P) as an actuating unit having a sensor ECU and control via a central control unit (M-ECU), wherein a driver input is transmitted from the sensor ECU via the central control unit (M-ECU) to at least one pressure supply device (DV1, DV2) via at least two redundant signal lines (SL1, SL2); or
- a master brake cylinder (HZ), which can be actuated by an actuating unit (P), in particular in the form of a brake pedal, having only one piston, the one pressure chamber (A1) of which is connected to a travel simulator (WS) and can be connected to at least one hydraulic brake circuit (BK1, BK2) via a hydraulic line (3), wherein at least one controlled valve (FV) of the at least one valve arrangement is provided for shutting off the hydraulic line (3),
wherein the braking system is embodied as a disintegrated system, wherein the pressure supply devices (DV1, DV2) and the actuating unit (P) are arranged separately and connected via a hydraulic line.

2. The device according to claim 1, **characterized in that** the hydraulic lines, solenoid valves of the at least one valve arrangement and hydraulic elements for pressure generation of the pressure supply (DV1, DV2) are arranged in an assembly unit or a hydraulic housing, and **in that** the actuating unit is arranged in a separate housing.

3. The device according to claim 1 or 2, **characterized in that** pressure can be built up in at least one direction of rotation by means of a gear pump of one of the at least two pressure supply devices (DV1, DV2), and pressure can be reduced via the gear pump by reversing the direction of rotation of the gear pump, in particular its motor drive.

4. The device according to any one of the preceding claims, **characterized in that** an ABS and/or ESP operation having at least axle-specific or brake circuit-specific regulation, in particular wheel-specific regulation, is possible by means of each pressure supply device (DV1, DV2) independently of the functionality of the other pressure supply device (DV1, DV2).

5. The device according to any one of the preceding claims, **characterized in that** both brake circuits (BK1, BK2) are connected to one another by means of a connecting line (VL), wherein the connecting line (VL) having at least one connecting valve (BP1, BP2), in particular having at least one switching valve of the at least one valve arrangement, can be shut off.

6. The device according to any one of the preceding claims, **characterized in that** the wheel brakes (RB1, RB2, RB3, RB4) are each connected to the pressure supply devices (DV1, DV2) via normally open switching valves (SV) of the at least one valve arrangement, wherein the switching valves (SV) are connected to the wheel brake in such a way that they open automatically as a result of the pressure in the wheel brakes (RB1, RB2, RB3, R4).

7. The device according to any one of the preceding claims, **characterized in that** the axis of the motor drive of the first pressure supply device (DV1) is arranged perpendicularly or parallel to the axis of the motor drive of the second pressure supply device (DV2).

8. A method using a device according to any one of the preceding claims, **characterized in that** the pressure build-up and pressure reduction occurs either by means of an electrically driven piston-cylinder unit of one (DV1) of the at least two pressure supply devices (DV1, DV2) in the PPC method via current control and/or piston path control, in particular taking into account the pressure-volume characteristic curve, and/or the pressure build-up and pressure reduction occurs by means of an electrically driven pump, in particular in the form of a gear pump of one (DV2) of the at least two pressure supply devices (DV1, DV2), via current control and/or rotational speed control of the drive of the pump, in particular having readjustment based on the leakage in the gear pump.

9. The method according to claim 8, **characterized in that** the pressure build-up and/or pressure reduction in at least two wheel brakes occurs simultaneously, in a temporally overlapping manner, or successively by means of a gear pump of one (DV2) of the at least two pressure supply devices (DV1, DV2) and/or a motor-driven piston-cylinder unit, wherein the pressure in the wheel brake belonging to the switching valve (SV) is maintained by means of a closed switching valve (SV).

10. The method according to claim 8, when dependent on claim 5 and/or 6, **characterized in that,** during the pressure build-up and/or pressure reduction, different pressure profiles for various wheel brakes or brake circuits are generated simultaneously or partially simultaneously by means of pulse-width modulation or PWM control of normally open solenoid valves (BP1, BP2, SV, ZAV) of the at least one valve arrangement.

11. The method according to any one of claims 8 to 10, **characterized in that** torque vectoring is carried out by means of one or both pressure supply devices (DV1, DV2) through wheel-specific pressure regulation of one or more wheels, and **in that** the torque vectoring function is maintained even in the event of failure of one pressure supply device.

12. The method according to claim 11, **characterized in that,** in the event of failure of the electric power steering, the device assumes an emergency steering function.

13. The method according to any one of claims 8 to 12, **characterized in that** one or both pressure supply devices (DV1, DV2) are used to carry out axle-specific recuperation regulation via axle-specific pressure regulation of a plurality of axles during pressure build-up and pressure reduction (pᵤₚ, p_{down}), in particular in the event of failure of one pressure supply device, the axle-specific pressure regulation is maintained via the connecting line (VL).

14. The method according to any one of claims 8 to 13, **characterized in that** braking pressure application occurs only at one wheel via pre-pressure control by a piston-cylinder unit or a gear pump of one of the at least two pressure supply devices (DV1, DV2), in particular by means of PPC methods for the piston-cylinder unit and/or current-speed regulation of the pump motor of the gear pump.

## Revendications

1. Dispositif de production de force de freinage dans un véhicule comprenant un système de freinage comprenant au moins deux dispositifs d'alimentation en pression entraînés de façon électromotorisée (DV1, DV2), dans lequel :
- le système de freinage comportant un premier et un deuxième circuit de freinage hydraulique (BK1, BK2) avec respectivement au moins un ou deux freins de roue à action hydraulique (RB1, RB2, RB3, RB4) ;
- la pression pouvant être tant mise que retirée avec un des dispositifs d'alimentation en pression (DV1, DV2) dans au moins un circuit de freinage (BK1, BK2) ;
- un dispositif d'alimentation en pression (DV2) est une pompe à entraînement en entrée électromotorisé, notamment une pompe à piston ou une pompe à roue dentée, avec une extraction continue de volume ;
- au moins un agencement de soupape avec des soupapes et/ou un dispositif d'alimentation en pression (DV1, DV2) est prévu pour le réglage individuel des roues en pression et/ou pour la séparation et/ou le raccordement des freins de roue (RB1, RB2, RB3, RB4) par rapport à un circuit de freinage ;
- une unité de commande et de réglage électronique (ECU) est prévue pour commander le système de freinage ou au moins ses parties ; et
- chaque circuit de freinage (BK1, BK2) comporte une conduite hydraulique principale (4, 5) via laquelle les freins de roue (RB1, RB2, RB3, RB4) sont reliés ou peuvent être reliés à chacun des deux dispositifs d'alimentation en pression (DV1, DV2) ;
**caractérisé en ce que** le système de freinage comprend :
- une pédale de frein électrique (P) prenant la forme d'une unité d'actionnement avec une unité ECU de détection et une commande via une unité de commande centrale (M-ECU), dans lequel un souhait du conducteur est transmis à au moins un dispositif d'alimentation en pression (DV1, DV2) via au moins deux câbles de transmission de signal (SL1, SL2) redondants à partir d'une unité ECU de détection via l'unité de commande centrale (M-ECU) ; ou
- un maître-cylindre de frein (HZ) actionnable avec un seul piston dont la chambre de pression (A1) est reliée à un simulateur de course (WS) et à au moins un circuit de freinage hydraulique (BK1, BK2) via une conduite hydraulique (3), dans lequel au moins une soupape (FV) commandée de l'au moins un agencement de soupape est prévue pour débloquer la conduite hydraulique (3), dans lequel le système de freinage est réalisé sous la forme d'un système éparpillé, dans lequel les dispositifs d'alimentation en pression (DV1, DV2) et l'unité d'actionnement (P) sont disposés de façon séparée et sont reliés par une conduite hydraulique.

2. Dispositif selon la revendication 1, **caractérisé en ce que** les conduites hydrauliques, les électrovannes de l'au moins un agencement de soupape et les éléments hydrauliques servant à la production de pression de l'alimentation en pression (DV1, DV2) sont disposés dans une unité de construction et/ou un carter hydraulique et que l'unité d'actionnement est disposée dans un carter séparé.

3. Dispositif selon la revendication 1 ou 2, **caractérisé en ce qu'**une pression est établie dans au moins une direction de rotation au moyen d'une pompe à roue dentée d'un des au moins deux dispositifs d'alimentation en pression (DV1, DV2) et que la pression peut être réduite via la pompe à roue dentée par inversion de la direction de rotation de la pompe à roue dentée, notamment de son entraînement.

4. Dispositif selon l'une quelconque des revendications précédentes, **caractérisé en ce qu'**un mode ABS et/ou ESP est possible indépendamment de la capacité fonctionnelle de l'autre dispositif d'alimentation en pression (DV1, DV2) au moyen d'au moins un réglage propre à l'essieu ou au circuit de freinage, notamment d'un réglage propre à la roue, grâce à chaque dispositif de mise sous pression (DV1, DV2).

5. Dispositif selon l'une quelconque des revendications précédentes, **caractérisé en ce que** les deux circuits de frein (BK1, BK2) sont reliés entre eux au moyen d'une conduite de liaison (VL), dans lequel la conduite de liaison (VL) peut être bloquée au moyen d'au moins une soupape de liaison (BP1, BP2), notamment d'au moins une soupape de commutation de l'au moins un agencement de soupape.

6. Dispositif selon l'une quelconque des revendications précédentes, **caractérisé en ce que** les freins de roue (RB1, RB2, RB3, RB4) sont respectivement reliés aux dispositifs d'alimentation en pression (DV1, DV2) via les soupapes de commutation (SV) ouvertes sans courant de l'au moins un agencement de soupape, dans lequel les soupapes de commutation (SV) sont reliées de telle sorte au frein de roue qu'elles s'ouvrent de façon autonome du fait de la pression régnant dans les freins de roue (RB1, RB2, RB3, R4).

7. Dispositif selon l'une quelconque des revendications précédentes, **caractérisé en ce que** l'axe de l'entraînement du premier dispositif d'alimentation en pression (DV1) est disposé perpendiculairement ou parallèlement à l'axe de l'entraînement du deuxième dispositif d'alimentation en pression (DV2).

8. Procédé avec utilisation d'un dispositif selon l'une quelconque des revendications précédentes, **caractérisé en ce que** l'alimentation et la réduction de pression est réalisée soit au moyen d'une unité piston-cylindre entraînée électriquement par un dispositif (DV1) parmi les au moins deux dispositifs d'alimentation en pression (DV1, DV2) en mode PPC via une commande de courant et/ou une commande de course de piston, notamment en tenant compte de la courbe caractéristique pression-volume et/ou l'alimentation ou la réduction de pression est réalisée au moyen d'une pompe entraînée électriquement, notamment sous la forme d'une pompe à roue dentée d'un dispositif (DV2) parmi les au moins deux dispositifs d'alimentation en pression (DV1, DV2), via la commande de courant et/ou la commande de vitesse de rotation de l'entraînement de la pompe, notamment avec la commande de suivi sur la base de la fuite prévue dans la pompe à roue dentée.

9. Procédé selon la revendication 8, **caractérisé en ce que** l'alimentation en pression et/ou la réduction de pression se produit simultanément dans au moins deux freins de roue, avec un chevauchement dans le temps, ou de façon successive au moyen d'une pompe à roue dentée d'un dispositif (DV2) parmi les au moins deux dispositifs d'alimentation en pression (DV1, DV2) et/ou d'une unité piston-cylindre entraînée de façon motorisée, dans lequel la pression est maintenue dans le frein de roue appartenant à la soupape de commutation (SV) à l'aide d'une soupape de commutation (SV) fermée.

10. Procédé selon la revendication 8, associée à la revendication 5 et/ou 6, **caractérisé en ce qu'**en cas d'alimentation en pression et/ou de réduction de pression simultanée ou partiellement simultanée, différentes courbes de pression sont produites pour différents freins de roue ou circuits de freinage à l'aide de la modulation de largeur d'impulsion et/ou de la commande PWM d'électrovannes ouvertes sans courant (BP1, BP2, SV, ZAV) de l'au moins un agencement de soupape.

11. Procédé selon l'une quelconque des revendications 8 à 10, **caractérisé en ce que** la vectorisation de couple est réalisée par le réglage de pression propre à chaque roue d'une roue ou de plusieurs roues au moyen d'un ou des deux dispositifs d'alimentation en pression (DV1, DV2) et que la fonction de vectorisation de couple est obtenue sous une forme droite également en cas de panne d'un dispositif d'alimentation en pression.

12. Procédé selon la revendication 11, **caractérisé en ce qu'**en cas de panne de la servodirection électrique, le dispositif intègre une fonction de direction de secours.

13. Procédé selon l'une quelconque des revendications 8 à 12, **caractérisé en ce qu'**un réglage de récupération propre à l'essieu est réalisé pour plusieurs essieux au moyen d'un ou des deux dispositifs d'alimentation en pression (DV1, DV2), au travers d'un réglage de pression propre à chaque essieu, tant pour l'alimentation en pression que pour la réduction de pression (Pauf, pab), le réglage de la pression propre à chaque axe étant maintenu grâce à la conduite de liaison (VL), notamment en cas de panne d'un dispositif d'alimentation en pression.

14. Procédé selon l'une quelconque des revendications 8 à 13, **caractérisé en ce qu'**une intervention dans la pression de frein ne se produit qu'au niveau d'une roue via la commande de prépression au travers d'une unité piston-cylindre ou d'une pompe à roue dentée d'un des au moins deux dispositifs d'alimentation en pression (DV1, DV2), notamment à l'aide d'un procédé PPC prévu pour l'unité piston-cylindre et/ou d'un réglage de vitesse de rotation électrique du moteur de pompe de la pompe à roue dentée.
